(19) Europäisches Patentamt
European Patent Office
Office européen des brevets

(11) EP 4 361 200 A1

(12) EUROPEAN PATENT APPLICATION
published in accordance with Art. 153(4) EPC

(43) Date of publication:
**01.05.2024 Bulletin 2024/18**

(21) Application number: **22828449.3**

(22) Date of filing: **22.06.2022**

(51) International Patent Classification (IPC):
***C08G 75/0268*** *(2016.01)* ***C07B 61/00*** *(2006.01)*
***C07C 319/14*** *(2006.01)* ***C07C 321/28*** *(2006.01)*
***C08G 75/0204*** *(2016.01)*

(52) Cooperative Patent Classification (CPC):
**C07B 61/00; C07C 319/14; C07C 321/28; C08G 75/0204; C08G 75/0268**

(86) International application number:
**PCT/JP2022/024850**

(87) International publication number:
**WO 2022/270533 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2021 JP 2021103551**

(71) Applicant: **Nippon Shokubai Co., Ltd.**
**Osaka-shi, Osaka 541-0043 (JP)**

(72) Inventors:
- **NAKAMURA, Jun-ichi**
  **Suita-shi, Osaka 564-0034 (JP)**
- **ISHIKAWA, Tomoki**
  **Suita-shi, Osaka 564-0034 (JP)**

(74) Representative: **Cabinet Beau de Loménie**
**158, rue de l'Université**
**75340 Paris Cedex 07 (FR)**

# (54) METHOD FOR MANUFACTURING SULFUR-CONTAINING POLYMER

(57) The present invention aims to provide a method for producing a sulfur-containing polymer such as polyarylene sulfide which has few by-products in the polymerization reaction and little effect caused by the catalyst residue used, on optical properties or other properties. The present invention relates to a method for producing a sulfur-containing polymer, the method including polymerizing a monomer component containing at least one of a disulfide compound or a thiol compound using a catalyst, the catalyst containing an iron-containing substance, an amount of iron in the iron-containing substance being 50 mol% or less relative to 100 mol% of the monomer component.

EP 4 361 200 A1

## Description

TECHNICAL FIELD

The present invention relates to methods for producing sulfur-containing polymers. Specifically, the present invention relates to a method for producing a sulfur-containing polymer, the method including polymerization using a specific catalyst.

BACKGROUND ART

Various polymers have been used in the field of optical materials. For example, known high refractive index materials include polycarbonates having aromatic rings and polymer materials having fluorene structures. In the field of optical materials, refractive-index-adjusting materials that improve the light extraction efficiency of LEDs and imaging lens materials have been required to have a high refractive index and a high Abbe number, i.e., a low light dispersion. Materials having a high refractive index and a low light dispersion that have been developed include materials into which sulfur molecules or halogen molecules are introduced and materials containing metal oxide nanoparticles. Polyarylene sulfides, which are sulfur-containing materials, especially polyphenylene sulfide, have been known as typical materials having excellent heat resistance, excellent corrosion resistance, excellent electrical insulation, and the like. In recent years, such sulfides have attracted attention for their application to optical materials with high refractive indices. For example, Patent Literature 1 discloses a molding material having a polyarylene sulfide skeleton in which one hydrogen atom of a benzene ring is replaced with a methyl group, as a molding material having excellent moldability in a solution state and capable of forming an optical member having a high refractive index of higher than 1.70.

Various methods for producing polyarylene sulfides such as polyphenylene sulfide have been known. For example, Patent Literature 1 discloses a method of oxidative polymerization using a disulfide compound or the like as a raw material and a quinone-based oxidant, and a method of oxidative polymerization using a vanadium compound as a catalyst. In addition, a long-known method is a method of reacting p-dichlorobenzene and sodium sulfide as raw materials in a polar organic solvent such as N-methyl-2-pyrrolidone (NMP) under high temperature, high pressure, and strong alkaline conditions (see, for example, Patent Literature 2). Another known method is Friedel-Crafts reaction using benzene and sulfur dichloride as raw materials and iron powder as a catalyst (see, for example, Non-Patent Literature 1). Also, another known method is polymerization of diphenyl disulfide using a Lewis acid such as $AlCl_3$ or $FeCl_3$ to give poly(p-phenylene sulfide) (see, for example, Non-Patent Literature 2).

CITATION LIST

- Patent Literature

Patent Literature 1: JP 2017-52834 A
Patent Literature 2: JP S45-3368 B

- Non-Patent Literature

Non-Patent Literature 1: J. Polym. Sci. B., 1974, Vol. 12, 2881-2889.
Non-Patent Literature 2: Bull. Chem. Soc. Jpn., 1989, Vol. 62, 3655-3660

SUMMARY OF INVENTION

- Technical Problem

Of conventional methods for producing polyarylene sulfide, the method of oxidative polymerization using a quinone-based oxidant, which is described in Patent Literature 1, generates a large amount of waste, which is required to be treated. The method of Patent Literature 2 generates a stoichiometric amount of sodium chloride as a by-product, inevitably requiring complicated purification, and involves reaction under high temperature, high pressure, and strong alkaline conditions. Thus, this method is far from an economically advantageous technique. In the method using iron powder as a catalyst described in Non-Patent Literature 1, a large amount of hydrogen chloride produced as a by-product

during the reaction is required to be treated. The method disclosed in Non-Patent Literature 2 uses a Lewis acid and equimolar diphenyl disulfide. Thus, purification is required to be repeated many times to remove a Lewis acid to the extent that the Lewis acid does not affect optical properties and the like. As described above, since these methods require processes for treating and purifying large amounts of by-products, they cannot be said to be economically advantageous techniques.

A method for producing polyarylene sulfide using a catalytic action has also been proposed. For example, Patent Literature 1 discloses a method involving oxidative polymerization using a vanadium compound as a catalyst. The present inventors have found that, in this method, the formation of by-products can be reduced in the polymerization reaction, while a vanadium compound is relatively expensive, even a small amount of residual vanadium compound is likely to affect properties such as optical properties, and a vanadium compound forms strong coordination bonds with the polymer produced and is thus hardly removed.

The present invention aims to provide a method for producing a sulfur-containing polymer such as polyarylene sulfide which has few by-products in the polymerization reaction and little effect caused by the catalyst residue used, on optical properties or other properties.

- Solution to Problem

The present inventors conducted various studies on methods for producing sulfur-containing polymers such as polyarylene sulfide using catalysts. They found that polymerization of a monomer such as a disulfide compound using a given amount or less of a substance containing iron as a catalyst can provide a polymer which has few by-products in the polymerization reaction and little effect caused by the catalyst residue used, on optical properties or other properties.

Thereby, the present invention has been completed.

That is, the present invention relates to a method for producing a sulfur-containing polymer, the method including polymerizing a monomer component containing at least one of a disulfide compound or a thiol compound using a catalyst,

the catalyst containing an iron-containing substance,
an amount of iron in the iron-containing substance being 50 mol% or less relative to 100 mol% of the monomer component.

Preferably, in the method for producing a sulfur-containing polymer, the polymerizing is performed in the presence of oxygen.

Preferably, in the method for producing a sulfur-containing polymer, the polymerizing is performed using at least one of an acid or a salt thereof.

Preferably, in the method for producing a sulfur-containing polymer, the iron-containing substance contains iron having an oxidation number of 3 or higher.

The present invention also relates to a sulfur-containing polymer containing:

at least one structural unit selected from the group consisting of a structural unit (A) represented by the following formula (3), a structural unit (B) represented by the following formula (4), and a structural unit (C) represented by the following formula (5),
the sulfur-containing polymer containing iron in an amount of 0.001 to 100000 ppm in 100% by mass of the sulfur-containing polymer,
the formulas being as follows:

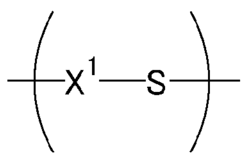
(3)

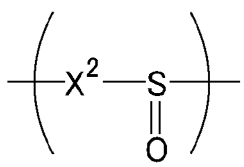
(4)

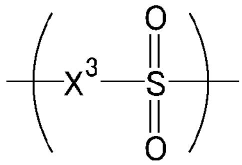

(5)

wherein $X^1$, $X^2$, and $X^3$ are the same as or different from each other and each represent a divalent aromatic hydrocarbon group optionally having a substituent.

The present invention also relates to a sulfur-containing polymer-containing composition containing: a sulfur-containing polymer produced by the method for producing a sulfur-containing polymer of the present invention; and a component different from the sulfur-containing polymer.

The present invention also relates to a sulfur-containing polymer-containing composition containing: the sulfur-containing polymer of the present invention; and a component different from the sulfur-containing polymer.

- Advantageous Effects of Invention

The method for producing a sulfur-containing polymer of the present invention is a method for polymerizing a monomer such as a disulfide compound using a catalyst containing a given amount or less of iron-containing substance. The production method can produce a sulfur-containing polymer which has few by-products in the polymerization reaction and little effect caused by the catalyst residue used, on optical properties or other properties. As a result, materials including such a polymer are useful as optical materials for lenses and the like.

DESCRIPTION OF EMBODIMENTS

The present invention will be described in detail below. Any combination of two or more of the following preferred embodiments of the present invention is also a preferred embodiment of the present invention.

Herein, "(meth)acrylate" refers to "acrylate" or "methacrylate", "(meth)acrylic" refers to "acrylic" or "methacrylic", and "(meth)acryloyl" refers to "acryloyl" or "methacryloyl". (Meth)acrylate is also referred to as (meth)acrylic acid ester.

1. Method for producing sulfur-containing polymer

The present invention relates to a method for producing a sulfur-containing polymer, the method including polymerizing a monomer component containing at least one of a disulfide compound or a thiol compound using a catalyst, the catalyst containing an iron-containing substance, with an amount of iron in the iron-containing substance being 50 mol% or less relative to 100 mol% of the monomer component.

In other words, the production method of the present invention includes polymerizing a monomer component containing at least one of a disulfide compound or a thiol compound in the presence of a catalyst containing an iron-containing substance, with an amount of iron in the iron-containing substance being 50 mol% or less relative to 100 mol% of the monomer component.

The method for producing a sulfur-containing polymer of the present invention can produce a sulfur-containing polymer which has few by-products in the polymerization reaction and little effect caused by the catalyst residue used, on optical properties or other properties. The reason why the method for producing a sulfur-containing polymer of the present invention can produce a sulfur-containing polymer which has few by-products in the polymerization reaction and little effect caused by the catalyst residue used, on optical properties or other properties, is as follows. The catalyst contains an iron-containing substance and is thus easily separated and removed from the polymer. Further, since the amount thereof used is reduced to a given amount or less, the catalyst can be separated and removed by a simple technique. Even if the residual catalyst is present, it has little effect on properties such as optical properties (e.g., visible light transmittance).

First, the polymerization is described.

<Polymerization>

The polymerization is polymerizing the monomer component in the presence of a catalyst containing an iron-containing substance (hereinafter also referred to as an iron catalyst). The polymerization is preferably oxidative polymerization.

Also, the polymerization is preferably performed by heating a composition containing the monomer component

and an iron catalyst (catalyst containing an iron-containing substance).

The polymerization is preferably performed in the presence of oxygen. This promotes an oxidative polymerization reaction.

Preferably, the polymerization is performed using an acid and/or a salt thereof, and the iron-containing substance contains iron having an oxidation number of 3 or higher. Details of these are described later.

Hereinafter, the composition containing the monomer component and an iron catalyst (catalyst containing an iron-containing substance) is also referred to as a raw material composition, and a composition from the start of the polymerization reaction to the end of the polymerization reaction is also referred to as a reaction composition.

A composition obtained by the polymerization reaction is also referred to as a polymer composition.

First, the monomer component used in the polymerization is described.

The monomer component contains a disulfide compound and/or a thiol compound. Preferably, the monomer component contains a disulfide compound among these.

The disulfide compound is more preferably a diaryl disulfide compound represented by the following formula (1), and the thiol compound is more preferably a thioaryl compound represented by the following formula (2). Use of these compounds can typically provide a sulfur-containing polymer containing at least one structural unit selected from the group consisting of structural units (A), (B), and (C), which are described later.

$$A^1\text{-S-S-}A^2 \qquad (1)$$

$$A^1\text{-SH} \qquad (2)$$

In the formulas (1) and (2), $A^1$ and $A^2$ are the same as or different from each other and each represent a monovalent aromatic hydrocarbon group optionally having a substituent.

The monovalent aromatic hydrocarbon group for $A^1$ and $A^2$ preferably has a carbon number of 6 to 30, more preferably a carbon number of 6 to 10.

Specific examples of the monovalent aromatic hydrocarbon group include phenyl, naphthyl, anthryl, triphenyl, biphenyl, and phenanthryl groups. Preferred among these is a phenyl group, a naphthyl group, an anthryl group, a biphenyl group, or a triphenyl group, with a phenyl group being more preferred.

The substituent (also referred to as "substituent A") optionally contained in the monovalent aromatic hydrocarbon group for $A^1$ and $A^2$ is preferably an alkyl group, an alkoxy group, an aryl group, an aralkyl group, or a sulfur-containing substituent, each of which optionally having a substituent (also referred to as "substituent B"); a reactive functional group; or a halogen atom.

Examples of the reactive functional group include acidic functional groups such as a carboxy group (-COOH), a phosphate group ($-OPO(OH)_3$), a hydroxy group (-OH), a sulfo group ($-SO_3H$), a sulfate group ($-OSO_3H$), a phosphonate group ($-PO(OH)_3$), a phosphinate group (-PO(OH)-), and a mercapto group (-SH); basic functional groups such as an amino group, an ammonium group, an imino group, an amide group, an imide group, a maleimide group, and a cyano group; curable functional groups such as a group having a reactive unsaturated bond (e.g., a group having a reactive double bond, such as a vinyl group, a (meth)acryloyl group, an allyl group, or a methallyl group), a group having a reactive ionic bond (e.g., a group having a reactive cyclic ether group, such as an epoxy group or an oxetane group); and groups containing these functional groups.

Examples of the groups containing these functional groups include groups each containing a bond chain and any of the above-described acidic functional groups, basic functional groups, and curable functional groups. In other words, in the present invention, the reactive functional group includes not only the above-described acidic functional groups, basic functional groups, and curable functional groups, but also groups containing any of these functional groups and a bond chain.

The groups containing any of these functional groups and a bond chain refer to groups containing at least one of these functional groups and a bond chain.

Examples of the bond chain include divalent hydrocarbon groups such as an alkylene group and an arylene group, bond groups such as ether, ester, carbonyl, and amide groups, and combinations thereof.

For example, the case where the reactive functional group is preferably a carboxy group means that the reactive functional group preferably includes a carboxy group and/or a group containing a carboxy group and a bond chain.

The preferred forms of the reactive functional group are different depending on the physical properties required for the sulfur-containing polymer obtained by the production method of the present invention.

For example, to improve the dispersibility of inorganic particles in the obtained sulfur-containing polymer, the reactive functional group is preferably an acidic functional group, a basic functional group, or a group containing any of these functional groups, more preferably a carboxy group, a phosphate group, a phosphonate group, a hydroxy group, or a group containing any of these functional groups.

To easily obtain a sulfur-containing polymer having a low linear expansion coefficient, the reactive functional

group is preferably a carboxy group, a phosphate group, a phosphonate group, a hydroxy group, or a group containing any of these functional groups and a bond chain, more preferably a hydroxy group or a group containing a hydroxy group and a bond chain.

To obtain a sulfur-containing polymer having improved adhesion to a base material, the reactive functional group is preferably a carboxy group, a phosphate group, a phosphonate group, or a group containing any of these functional groups, more preferably a phosphate group, a phosphonate group, or a group containing any of these functional groups and a bond chain. Examples of a base material to which the polymer highly adheres include inorganic base materials such as inorganic particle substrates (coatings), metal oxide particle substrates (coatings), glass substrates, silicone substrates, and copper substrates, and organic base materials such as organic particle substrates (coatings) and polymer film substrates.

To obtain a sulfur-containing polymer having improved heat resistance, mechanical strength, and solvent resistance, the reactive functional group is preferably a carboxy group, a hydroxy group, an amino group, a maleimide group, a curable functional group, or a group containing any of these functional groups and a bond chain, more preferably a carboxy group, a hydroxy group, an amino group, a maleimide group, a vinyl group, a (meth)acryloyl group, an allyl group, a methallyl group, an epoxy group, an oxetane group, or a group containing any of these functional groups and a bond chain.

In particular, to obtain a sulfur-containing polymer having excellent physical properties and a higher refractive index, the reactive functional group is preferably a carboxy group, a phosphate group, a phosphonate group, a hydroxy group, a curable functional group, or a group containing any of these functional groups and a bond chain, more preferably a carboxy group, a phosphate group, a hydroxy group, a vinyl group, an epoxy group, or a group containing any of these functional groups and a bond chain, still more preferably a phosphate group, a hydroxy group, a vinyl group, or a group containing any of these functional groups and a bond chain.

To achieve a high refractive index and low thermal expansion coefficient, and to improve the adhesion to the base material, the reactive functional group is preferably a carboxy group, a phosphate group, or a group containing any of these functional groups and a bond chain.

Examples of the halogen atom include fluorine, chlorine, bromine, and iodine atoms. Preferred among these is a bromine atom.

Examples of the alkyl group include methyl, ethyl, n-propyl, isopropyl, n-butyl, s-butyl, t-butyl, pentyl, isopentyl, neopentyl, hexyl, 2-methylpentyl, 3-methylpentyl, 2,2-dimethylbutyl, 2,3-dimethylbutyl, and heptyl groups. Preferred among these is a C1-C18 alkyl group, with a C1-C6 alkyl group being more preferred and a methyl group being still more preferred.

Examples of the alkoxy group include methoxy, ethoxy, propoxy, isopropoxy, s-butoxy, t-butoxy, pentyloxy, phenoxy, cyclohexyloxy, and benzyloxy groups. Preferred among these is a C1-C18 alkoxy group, with a C1-C6 alkoxy group being more preferred and a methoxy group being still more preferred.

Examples of the aryl group include phenyl, naphthyl, anthryl, biphenyl, and triphenyl groups. Preferred among these is a phenyl group. The carbon number of the aryl group is preferably 6 to 30, more preferably 6 to 18, still more preferably 6 to 12.

Examples of the aralkyl group include benzyl, phenethyl, phenylpropyl, phenylpentyl, phenylhexyl, and phenyloctyl groups. The carbon number of the aralkyl group is preferably 7 to 14, more preferably 7 to 9.

Examples of the sulfur-containing substituent include a thioalkyl group and a thioaryl group. Preferred among these is a thioalkyl group. The carbon number of the sulfur-containing substituent is preferably 1 to 8, more preferably 1 to 6, still more preferably 1 to 4.

The alkyl group, alkoxy group, aryl group, aralkyl group, and sulfur-containing substituent may each further optionally have a substituent (substituent B). From the viewpoint of the dispersibility of the inorganic particles, the substituent (substituent B) is preferably a halogen atom.

The substituent (substituent B) for the alkoxy group, aryl group, aralkyl group, and sulfur-containing substituent may also be an alkyl group. An alkyl group is preferred from the viewpoint of the solubility of the resulting sulfur-containing polymer.

To further increase the refractive index and Abbe number, the substituent (substituent A) optionally contained in the monovalent aromatic hydrocarbon group for $A^1$ and $A^2$ is more preferably a C1-C18 alkyl group or a sulfur-containing substituent, still more preferably a methyl group or a thioalkyl group, particularly preferably a methyl group.

To improve the dispersibility of the inorganic particles, the substituent optionally contained in the monovalent aromatic hydrocarbon group is more preferably a hydroxy group or a sulfur-containing substituent, still more preferably a hydroxy group, a thioalkyl group, or a thioaryl group, particularly preferably a hydroxy group.

The number of the substituents A optionally contained in the monovalent aromatic hydrocarbon group is not limited and is preferably as small as possible to obtain a sulfur-containing polymer having a higher refractive index. Specifically, the number is preferably 1 to 6, more preferably 1 to 3, still more preferably 1.

The substituent A may be bonded to any position of the monovalent aromatic hydrocarbon group. The same

applies to the case where the monovalent aromatic hydrocarbon group is a phenyl group. For example, when the substituent A is an alkyl group, the substituent A may be bonded to any position of the phenyl group. From the viewpoint of the solubility of the obtained sulfur-containing polymer in a solvent and light resistance of the polymer, the substituent A is preferably bonded to the 4-position of the phenyl group.

Preferably, the diaryl disulfide compound is a compound represented by the following formula (1-1) among the compounds represented by the formula (1). Preferably, the thioaryl compound is a compound represented by the following formula (2-1) among the compounds represented by the formula (2).

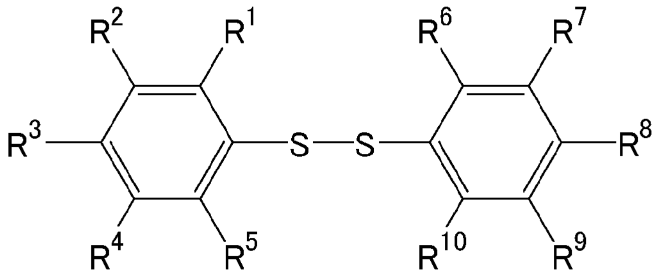

(1-1)

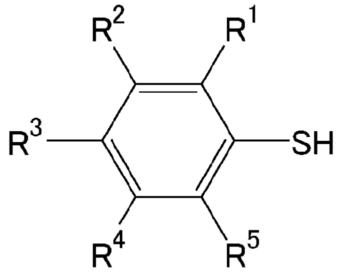

(2-1)

In the formulas (1-1) and (2-1), $R^1$, $R^2$, $R^3$, $R^4$, $R^5$, $R^6$, $R^7$, $R^8$, $R^9$, and $R^{10}$ are the same as or different from each other and each represent a hydrogen atom or a substituent (A-1). At least one of $R^1$, $R^2$, $R^3$, $R^4$, or $R^5$ is a hydrogen atom, and at least one of $R^6$, $R^7$, $R^8$, $R^9$, and $R^{10}$ is a hydrogen atom.

The substituent (A-1) is preferably an alkyl group, an alkoxy group, an aryl group, an aralkyl group, or a sulfur-containing substituent, each of which optionally has a substituent (also referred to as "substituent (B-1)"); a reactive functional group; or a halogen atom.

$R^1$, $R^2$, $R^3$, $R^4$, $R^5$, $R^6$, $R^7$, $R^8$, $R^9$, and $R^{10}$ in the formula (1-1) may be the same as or different from each other.

$R^1$, $R^2$, $R^3$, $R^4$, and $R^5$ in the formula (2-1) may be the same as or different from each other.

The substituent (A-1) and preferred embodiments thereof are the same as the substituent (A) optionally contained in the monovalent aromatic hydrocarbon group and preferred embodiments thereof. The substituent (B-1) and preferred embodiments thereof are the same as the substituent (B) optionally contained in the monovalent aromatic hydrocarbon group and preferred embodiments thereof. To obtain a sulfur-containing polymer having a higher refractive index, the substituent (A-1) is still more preferably a methyl group or a thioalkyl group, particularly preferably a methyl group.

In the formula (1-1), 0 to 10 of $R^1$, $R^2$, $R^3$, $R^4$, $R^5$, $R^6$, $R^7$, $R^8$, $R^9$, and $R^{10}$ may be the substituent (A-1). To obtain a sulfur-containing polymer having a higher refractive index, preferably 2 to 6, more preferably 2 to 4, still more preferably 2 of $R^1$, $R^2$, $R^3$, $R^4$, $R^5$, $R^6$, $R^7$, $R^8$, $R^9$, and $R^{10}$ may be the substituent (A-1).

In the formula (1-1), 0 to 5 of $R^1$, $R^2$, $R^3$, $R^4$, and $R^5$ may be the substituent (A-1). To obtain a sulfur-containing polymer having a higher refractive index, preferably 1 to 3, more preferably 1 or 2, still more preferably 1 of $R^1$, $R^2$, $R^3$, $R^4$, and $R^5$ may be the substituent (A-1).

The same applies to $R^6$, $R^7$, $R^8$, $R^9$, and $R^{10}$ in the formula (1-1).

The same applies to $R^1$, $R^2$, $R^3$, $R^4$, and $R^5$ in the formula (2-1).

An example of a preferred embodiment of the diaryl disulfide compound represented by the formula (1-1) and an example of a preferred embodiment of the thioaryl compound represented by the formula (2-1) are a compound represented by the following formula (1-1-1) and a compound represented by the following formula (2-1-1), respectively.

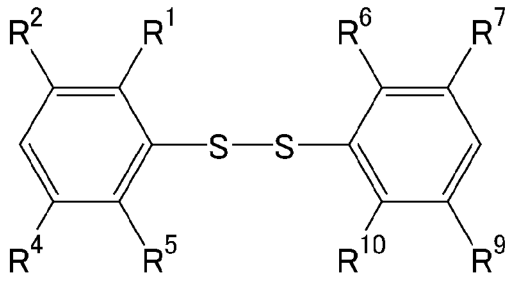

(1-1-1)

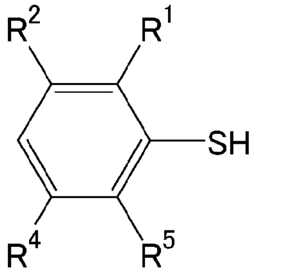

(2-1-1)

$R^1$, $R^2$, $R^4$, $R^5$, $R^6$, $R^7$, $R^9$, and $R^{10}$ in the formulas (1-1-1) and (2-1-1) are the same as $R^1$, $R^2$, $R^4$, $R^5$, $R^6$, $R^7$, $R^9$, and $R^{10}$ in the formulas (1-1) and (2-1).

Specific examples of the diphenyl sulfide compound include 3,3'-dimethyldiphenyl disulfide, 2,2'-dimethyldiphenyl disulfide, 4,4'-dimethyldiphenyl disulfide (bis(4-methylphenyl) disulfide), diphenyl disulfide, 2,2',3,3'-tetramethyldiphenyl disulfide, 2,2',5,5'-tetramethyldiphenyl disulfide, 2,2',6,6'-tetramethyldiphenyl disulfide, 3,3 ',5,5'-tetramethyldiphenyl disulfide, 2,2',3,3',5,5'-hexamethyldiphenyl disulfide, 2,2',3,3',6,6'-hexamethyldiphenyl disulfide, 2,2',3,3',5,5',6,6'-octamethyldiphenyl disulfide, 2,2'-diethyldiphenyl disulfide, 3,3'-diethyldiphenyl disulfide, 2,2',6,6'-tetraethyldiphenyl disulfide, 2,2',3,3'-tetraethyldiphenyl disulfide, 2,2',5,5'-tetraethyldiphenyl disulfide, 3,3',5,5'-tetraethyldiphenyl disulfide, 2,2',3,3',5,5'-hexaethyldiphenyl disulfide, 2,2',3,3',6,6'-hexaethyldiphenyl disulfide, 2,2',3,3',5,5',6,6'-octaethyldiphenyl disulfide, 2,2'-dipropyldiphenyl disulfide, 3,3'-dipropyldiphenyl disulfide, 2,2',6,6'-tetrapropyldiphenyl disulfide, 2,2',3,3'-tetrapropyldiphenyl disulfide, 2,2',5,5'-tetrapropyldiphenyl disulfide, 3,3',5,5'-tetrapropyldiphenyl disulfide, 2,2', 3,3',5,5'-hexapropyldiphenyl disulfide, 2,2',3,3',6,6'-hexapropyldiphenyl disulfide, 2,2',3,3',5,5', 6,6'-octapropyldiphenyl disulfide, 2,2'-diisopropyldiphenyl disulfide, 3,3'-diisopropyldiphenyl disulfide, 2,2',6,6'-tetraisopropyldiphenyl disulfide, 2,2',3,3'-tetraisopropyldiphenyl disulfide, 2,2',5,5'-tetraisopropyldiphenyl disulfide, 3,3',5,5'-tetraisopropyldiphenyl disulfide, 2,2',3,3',5,5'-hexaisopropyldiphenyl disulfide, 2,2',3,3',6,6'-hexaisopropyldiphenyl disulfide, and 2,2',3,3',5,5',6,6'-octaisopropyldiphenyl disulfide.

Specific examples of the thiol compound include 3-methylbenzenethiol, 2-methylbenzenethiol, 4-methylbenzenethiol, thiophenol (benzenethiol), 2,3-dimethylbenzenethiol, 2,5-dimethylbenzenethiol, 2,6-dimethylbenzenethiol, and 3,5-dimethylbenzenethiol.

The disulfide compound can also be prepared by oxidizing a thiol compound. In the polymerization, a thiol compound may be used as a precursor of the disulfide compound. The disulfide compound can be obtained by oxidatively coupling two thiol compound molecules. The oxidative coupling may be performed by any known method.

Next, the catalyst used for the polymerization is described.

The catalyst contains an iron-containing substance.

The iron-containing substance encompasses all substances containing iron. Non-limiting examples of the iron-containing substance include iron-containing metals, iron compounds, and iron-containing substances in other forms.

The iron-containing substance preferably mainly contains iron as a metal element. Specifically, the amount of iron based on 100 mol% of the total amount of metal elements in the iron-containing substance is preferably 50 mol% or more, more preferably 80 mol% or more, still more preferably 95 mol% or more, further preferably 98 mol% or more, particularly preferably 100 mol%.

Examples of the iron-containing metals include metallic iron consisting essentially of iron and iron alloys. The iron alloys are not limited as long as they are alloys containing iron (Fe). Preferred examples thereof include ferroalloys containing iron (Fe) as a main component and at least one selected from the group consisting of Al, B, Ce, Cr, Mg, Mn, Mo, Nb, Ni, P, Si, Ti, V, and W as an additive element.

The iron compounds are not limited as long as they are compounds containing iron. Examples thereof include inorganic compounds, organic acid salts, and complexes (coordination compounds).

The inorganic compounds are not limited as long as they are inorganic compounds containing iron as a metal element. Examples thereof include halides, sulfates, nitrates, phosphates, silicates, carbonates, hydroxides, oxides,

sulfides, tellurides, and intermetallic compounds. Preferred among these are halides. The halides are preferably fluorides, chlorides, bromides, or iodides, more preferably chlorides.

The organic acid salts are not limited as long as they are organic acid salts containing iron as a metal element. Examples thereof include carboxylates, dithiocarbamates, and sulfonates. Preferred examples of the carboxylates include iron acetate and iron oxalate. Preferred examples of the dithiocarbamates include iron diethyldithiocarbamate and iron dibenzyldithiocarbamate. Preferred examples of the sulfonates include iron p-toluenesulfonate and iron trifluoromethanesulfonate.

The complexes are not limited as long as they are complexes containing iron as a metal element. Examples thereof include ammine complexes, cyano complexes, halogeno complexes, hydroxy complexes, phthalocyanine complexes, porphyrin complexes, carbonyl complexes, cyclopentadienyl complexes, salen complexes, ethylenediamine complexes, β-diketone complexes, and β-diketoester complexes. A preferred example of the porphyrin complexes is 5,10,15,20-tetraphenyl-21H,23H-porphine iron (III) chloride.

Examples of the iron-containing substances in other forms include those having a structure in which a cation exchanger such as zeolite or mica contains an iron (II) ion or an iron (III) ion as a cation.

Particularly preferred among the above-described iron-containing substances are ferric chloride ($Fe(Cl)_3$), ferrous chloride ($Fe(Cl)_2$), 5,10,15,20-tetraphenyl-21H,23H-porphine iron (III) chloride, iron (III) trifluoromethanesulfonate, and iron-salen complexes.

The catalyst may contain one of the iron-containing substances or two or more of these.

The catalyst may be present in any form in the raw material composition. For example, the catalyst may be dispersed in the form of particles or the like in the raw material composition, may be dissolved in a monomer component, or may be dissolved in a solvent in the case where a solvent is used.

Also, the iron-containing substance may be present in any form in the raw material composition. For example, the iron-containing substance may be dispersed in the form of particles or the like in the raw material composition, or may be dissolved in a monomer component or a solvent in the case where a monomer component or a solvent is used. The solvent is described later. The same applies to the form of the catalyst and the form of the iron-containing substance to be present in the reaction composition.

The iron in the iron-containing substance may have any oxidation number (valence). For example, the oxidation number is preferably -2 or higher and 6 or lower. The iron-containing substance preferably contains iron having an oxidation number of -2, -1, 0, 1, 2, 3, 4, 5, or 6. To increase the polymerization reaction rate, the iron-containing substance preferably contains iron having an oxidation number of 1 or higher, more preferably iron having an oxidation number of 3 or higher, particularly preferably iron having an oxidation number of 3.

The iron-containing substance may contain only one type of iron having a certain oxidation number or irons having two or more different oxidation numbers.

The amount of the catalyst used in the polymerization is expressed as the amount of the iron-containing substance, and the amount of iron in the iron-containing substance is 50 mol% or less relative to 100 mol% of the monomer component. To easily obtain a sulfur-containing polymer having a high molecular weight, the amount of iron is preferably 30 mol% or less, more preferably 20 mol% or less, still more preferably 10 mol% or less. To increase polymerization reactivity, the amount of iron is preferably 0.01 mol% or more, more preferably 0.1 mol% or more, still more preferably 1 mol% or more.

In the polymerization, the amount of iron in the iron-containing substance is preferably 0.01 to 30 mol%, more preferably 0.1 to 20 mol%, still more preferably 1 to 10 mol%, relative to 100 mol% of the monomer component.

At least part of the iron-containing substance acts as a catalyst for the polymerization reaction of the monomer component in the polymerization reaction. Preferably, the iron-containing substance acts as a catalyst for oxidative polymerization in the polymerization, and almost the entire amount of the iron-containing substance in the raw material composition and/or the reaction composition acts as a catalyst. From this point of view, an appropriate amount of the iron-containing substance to be used relative to the monomer component is selected to fall within the range described above, with taking into account the temperature conditions and other conditions during the polymerization reaction.

The catalyst used in the polymerization may contain not only the iron-containing substance but also a substance containing a non-iron metal element. The substance containing a non-iron metal element may be any substance not containing iron but containing a non-iron metal element. Examples thereof include metals, metal compounds, and metal complexes.

When the catalyst used in the polymerization contains a substance containing a non-iron metal element, the total amount of the metal elements in the substance containing a non-iron metal element is preferably less than 10 mol%, more preferably less than 5 mol%, still more preferably less than 2 mol%, particularly preferably less than 1 mol%, relative to 100 mol% of iron in the iron-containing substance.

Further, the amount of the substance containing a non-iron metal element preferably falls within such a range that the total amount of the metal elements in the substance containing a non-iron metal element is less than 0.01 mol%, more preferably less than 0.002 mol%, still more preferably less than 0.001 mol%, particularly preferably less than 0.0005

mol%, relative to 100 mol% of the monomer component.

The polymerization is preferably performed in the presence of oxygen. In the presence of oxygen, the oxidative polymerization reaction is facilitated.

Specifically, an oxygen-containing gas is preferably supplied during the polymerization reaction. In other words, the polymerization is preferably performed while oxygen-containing gas is supplied. For example, an oxygen-containing gas may be supplied to the gas phase during the polymerization reaction or an oxygen-containing gas may be bubbled into the reaction composition during the polymerization reaction.

Presumably, the polymerization reaction in the presence of an oxygen-containing gas can facilitate the hydrogen elimination reaction from a carbon atom constituting the aromatic ring in the monomer component.

In the polymerization, the oxidation number of iron in the iron-containing substance may typically change. The polymerization reaction in the presence of an oxygen-containing gas allows the valence of iron in the iron-containing substance to be maintained at a high oxidation number, so that the oxidative polymerization can be further facilitated. From this point of view, an oxygen-containing gas is preferably continuously supplied, particularly preferably bubbled, to the reaction composition during the polymerization reaction.

The oxygen-containing gas is preferably a gas containing oxygen molecules ($O_2$). The oxygen-containing gas may contain a gas component other than oxygen molecules ($O_2$). Preferred examples of the gas component other than oxygen molecules ($O_2$) in the oxygen-containing gas include, but are not limited to, inert gases including nitrogen ($N_2$) and rare gases such as helium (He), neon (Ne), argon (Ar), krypton (Kr), xenon (Xe), and radon (Rn). In addition to the inert gases, the oxygen-containing gas may contain carbon dioxide ($CO_2$) or water vapor, for example.

The percentage of oxygen molecules ($O_2$) in the oxygen-containing gas is not limited. Preferably, the percentage by volume of oxygen molecules ($O_2$) in 100 vol% of the oxygen-containing gas is 0.1 to 100 vol% at room temperature (25°C) and 1 atm. It is more preferably 1 vol% or more, still more preferably 10 vol% or more. The upper limit thereof is more preferably 60 vol% or less, still more preferably 30 vol% or less.

The percentage of oxygen molecules ($O_2$) in the oxygen-containing gas is more preferably 1 to 60 vol%, still more preferably 10 to 30 vol%, in 100 vol% of the oxygen-containing gas.

The total amount of oxygen molecules ($O_2$) and inert gases in the oxygen-containing gas is not limited. Preferably, the total percentage by volume of oxygen molecules ($O_2$) and inert gases is 80 to 100 vol% in 100 vol% of the oxygen-containing gas at room temperature (25°C) and 1 atm. It is more preferably 95 vol% or more, still more preferably 98 vol% or more.

Non-limiting examples of the oxygen-containing gas include oxygen gas, a gas mixture of oxygen and nitrogen, and air. From the viewpoint of excellent economic efficiency, air is preferably used. The concentration of water vapor in the oxygen-containing gas is not limited and is preferably 1000 g/$m^3$ or less, more preferably 10 g/$m^3$ or less, still more preferably 1 g/$m^3$ or less, most preferably 0.1 g/$m^3$ or less. Dry air is preferred.

The supply amount of the oxygen-containing gas is not limited. Preferably, the supply amount (supply rate) per minute of the oxygen-containing gas is 0.0001 $m^3$/min to 10 $m^3$/min relative to 1 $m^3$ of the total volume of the reaction composition. To increase the reaction rate, the supply amount is more preferably 0.0005 $m^3$/min or more, still more preferably 0.001 $m^3$/min or more. From the viewpoint of easy control of the reaction temperature, the upper limit of the supply amount is more preferably 1 $m^3$/min or less, still more preferably 0.1 $m^3$/min or less.

As for the range of the supply amount of the oxygen-containing gas, the supply amount (supply rate) per minute is more preferably 0.0005 to 1 $m^3$/min, still more preferably 0.001 to 0.1 $m^3$/min, relative to 1 $m^3$ of the total volume of the reaction composition.

As for the supply amount of the oxygen-containing gas, the supply amount (supply rate) of oxygen ($O_2$) per minute is preferably 0.00002 $m^3$/min to 2 $m^3$/min relative to 1 $m^3$ of the total volume of the reaction composition. To increase the reaction rate, the supply amount is more preferably 0.0001 $m^3$/min or more, still more preferably 0.0002 $m^3$/min or more. From the viewpoint of easy control of the reaction temperature, the upper limit of the supply amount is more preferably 0.2 $m^3$/min or less, still more preferably 0.02 $m^3$/min or less.

As for the range of the supply amount of the oxygen-containing gas, the supply amount (supply rate) of oxygen ($O_2$) per minute is more preferably 0.0001 to 0.2 $m^3$/min, still more preferably 0.0002 to 0.02 $m^3$/min, relative to 1 $m^3$ of the total volume of the reaction composition.

In the polymerization, preferably, an acid and/or a salt thereof is further used. Use of an acid and/or a salt thereof together with a catalyst containing an iron-containing substance allows the molecular weight of the polymer obtained by the polymerization reaction to be easily controlled to fall within a higher range. Thus, a sulfur-containing polymer having a high molecular weight can be easily produced even in a short time.

One type of an acid and/or a salt thereof may be used or two or more types thereof may be used.

The acid is preferably a Bronsted acid. Examples thereof include inorganic acids such as phosphoric acid, phosphonic acid, nitric acid, hydrochloric acid, hydrobromic acid, sulfuric acid, persulfuric acid, and sulfurous acid; sulfonic acids such as methanesulfonic acid, benzenesulfonic acid, toluenesulfonic acid, 10-camphorsulfonic acid, trifluoromethanesulfonic acid, and 1,1,2,2-tetrafluoroethanesulfonic acid; and carboxylic acids such as acetic acid, trifluoroacetic acid, perfluoropropionic acid, perfluorobutyric acid, and benzoic acid.

From the viewpoint of ionic bonding and complex formation with catalysts, monomers, and intermediates, the acid is preferably an acid having an acid dissociation constant of -19 to 4. The acid is more preferably an acid having an acid dissociation constant of -8 or more and 3 or less. In other words, the acid is more preferably an acid having an acid dissociation constant of -8 to 3.

Examples of the acid having an acid dissociation constant of -19 to 4 include inorganic acids such as phosphoric acid, nitric acid, sulfuric acid, persulfuric acid, sulfurous acid, hydrochloric acid, and hydrobromic acid; sulfonic acids such as methanesulfonic acid, benzenesulfonic acid, toluenesulfonic acid, 10-camphorsulfonic acid, trifluoromethanesulfonic acid, and 1,1,2,2-tetrafluoroethanesulfonic acid; chlorocarboxylic acids such as chloroacetic acid, dichloroacetic acid, and trichloroacetic acid; and fluorocarboxylic acids such as fluoroacetic acid, difluoroacetic acid, trifluoroacetic acid, perfluoropropionic acid, perfluorobutyric acid, and 4-fluorobenzoic acid. Preferred among these are 10-camphorsulfonic acid, trifluoromethanesulfonic acid, and persulfuric acid.

Non-limiting examples of the salt of any of the acids include the metal elements of Group 1 of the periodic table, such as sodium and potassium; the metal elements of Group 2 of the periodic table, such as magnesium and calcium; and salts of ammonium or the like with any of the acids. Preferred among these are sodium persulfate, ammonium persulfate, sodium toluenesulfonate, and sodium trifluoromethanesulfonate, for example. A solution prepared by dissolving the salt of any of the acids in pure water preferably has a pH of 1 to 6.9, more preferably 2 to 6, at 25°C.

The amount of the acid and/or a salt thereof used is preferably 0.01 to 100 mol%, more preferably 0.1 to 10 mol%, still more preferably 0.5 to 5 mol%, relative to 100 mol% of the monomer component.

The amount of the acid and/or a salt thereof used is preferably 0.1 to 1000 mol%, more preferably 1 to 100 mol%, still more preferably 5 to 50 mol%, relative to 100 mol% of iron in the iron-containing substance.

The entire reaction system containing the acid and/or a salt thereof (raw material composition containing the acid and/or a salt thereof) preferably has a pH of 0.1 to 7, more preferably 1 to 6, most preferably 2 to 5, to improve the reaction efficiency.

The pH is a value obtained by subjecting the reaction system (raw material composition containing the acid and/or a salt thereof) directly to measurement in which pH test paper or a pH meter is used.

In the polymerization, the polymerization temperature may be any temperature at which the polymerization, preferably oxidative polymerization, can proceed. To allow the oxidative polymerization to easily proceed, the reaction temperature is preferably 0°C to 300°C, more preferably 10°C or higher, still more preferably 100°C or higher. To reduce or prevent side reactions, the polymerization temperature is more preferably 200°C or lower, still more preferably 180°C or lower.

The polymerization temperature is more preferably within the range of 10°C to 200°C, still more preferably 100°C to 180°C.

The reaction duration is not limited and is typically 0.1 to 300 hours, preferably 1 to 200 hours, more preferably 5 to 100 hours, still more preferably 10 to 50 hours.

The composition (raw material composition) containing the monomer component and the catalyst containing an iron-containing substance is held at the polymerization temperature for the polymerization time, whereby the polymerization reaction of the monomer component occurs, forming the sulfur-containing polymer.

The polymerization reaction may be performed in a state where the monomer component is melted, or dissolved or dispersed in a solvent. When the polymerization reaction is performed in a state where the monomer component is melted, the polymerization temperature is preferably set to a temperature equal to or higher than the melting point of the monomer component. In this case, preferably, by heating the raw material composition, the polymerization reaction is performed while the temperature of the reaction composition is held at a temperature equal to or higher than the melting point of the monomer component.

When the polymerization reaction is performed in a state where the monomer component is dissolved or dispersed in a solvent, the polymerization may be performed at a temperature equal to or lower than the boiling point of the solvent. Alternatively, the polymerization may be performed under reflux conditions or under pressure while the temperature is increased to a temperature equal to or higher than the boiling point of the solvent by heating.

Preferred examples of the solvent include, but are not limited to, dichloromethane, chloroform, carbon tetrachloride, 1,2-dichloroethane, tetrachloroethylene, 1,1,2,2-tetrachloroethane, nitromethane, nitrobenzene, chlorobenzene, 1,2-dichlorobenzene, 1,3-dichlorobenzene, N-methylpyrrolidone, tetrahydrofuran, ethyl acetate, and cyclopentyl methyl ether. One or more of these may be used.

The amount of the solvent used is not limited, and is preferably 1 to 10000 parts by mass, more preferably 10 to 1000 parts by mass, relative to 100 parts by mass of the monomer component as a raw material.

In the polymerization, the monomer component may be sequentially added during the polymerization reaction.

In the polymerization, multi-step polymerization may be performed. For example, any of the above-described thiol compounds is oxidatively polymerized to obtain a disulfide compound, and then the disulfide compound is oxidatively polymerized.

Through the polymerization, a composition containing a polymer (sulfur-containing polymer) obtained by polymerizing the monomer component, that is, a polymer composition is obtained. The obtained polymer is a sulfur-containing polymer in which the main chain contains a repeating structure in which the hydrocarbon chains and the like in the disulfide compound and/or the thiol compound are linked by sulfide groups (-S-) and the like.
When the monomer component is a diaryl disulfide compound represented by the formula (1) and/or a thioaryl compound represented by the formula (2), a sulfur-containing polymer can be typically obtained containing at least one structural unit selected from the group consisting of structural units (A), (B), and (C), which are described below.
Under the preferred conditions described above, a sulfur-containing polymer can be obtained in which the amount of the structural unit (A) is relatively greater than the amounts of the other structural units. Although the polymer composition contains at least a residue of the iron catalyst (catalyst containing an iron-containing substance) used in the polymerization, the amount thereof can be reduced by simple purification.

<Steps other than polymerization>

The production method of the present invention may include a different step other than the polymerization. Examples of the different step include reacting the sulfur-containing polymer with a sulfonating agent and a reducing substance, purification, and/or oxidation.

(1) Reacting sulfur-containing polymer with sulfonating agent and reducing substance

When the production method of the present invention includes reacting the polymer with a sulfonating agent and a reducing substance, a mercapto group can be introduced into the aromatic hydrocarbon group of the sulfur-containing polymer.
The reaction is considered to proceed by the mechanism in which the sulfur-containing polymer is reacted with a sulfonating agent and a reducing substance to introduce a sulfonyl group derived from the sulfonating agent into the aromatic hydrocarbon group and the sulfonyl group is reduced to a thiol group by the action of the reducing substance.
Examples of the sulfonating agent include concentrated sulfuric acid, fuming sulfuric acid, chlorosulfonic acid, and chlorosulfonyl. Preferred among these is chlorosulfonic acid.
The amount of the sulfonating agent used is preferably 0.1 to 10000% by mass relative to 100% by mass of the sulfur-containing polymer. It is more preferably 1% by mass or more, still more preferably 10% by mass or more, and more preferably 1000% by mass or less, still more preferably 500% by mass or less.
The amount of the sulfonating agent used is more preferably 1 to 1000% by mass, still more preferably 10 to 500% by mass, relative to 100% by mass of the sulfur-containing polymer.
Examples of the reducing substance include metal or metalloid hydrides and complex compounds (art complexes) thereof, such as sodium hydride, sodium borohydride, lithium aluminum hydride, butyllithium, diborane, sodium cyanoborohydride, lithium triethylborohydride, and lithium tri(sec-butyl)borohydride, potassium tri(sec-butyl)borohydride, diisobutylaluminum hydride, sodium bis(2-methoxyethoxy)aluminum hydride, tributyltin hydride, lithium hexamethyldisilazide, and lithium diisopropylamide; metals such as metallic tin and metallic zinc; compounds containing low-valent metal ions such as an iron (II) ion and a stannous (II) ion; acid-based organic compounds such as formic acid and oxalic acid; phosphine-based organic compounds such as triphenylphosphine; and inorganic compounds such as hydrazine.
Preferred among these are metals. When a metal is used as the reducing substance, even when Fe in the catalyst used in the process of producing the polymer is left, the remaining Fe can be removed. Thereby, a sulfur-containing polymer with less coloration tends to be easily obtained. To sufficiently obtain the effect, metallic zinc is more preferred among the metals. The metal is preferably in the form of fine particles.
The amount of the reducing substance used is preferably 0.01 to 1000% by mass relative to 100% by mass of the polymer. It is more preferably 0.1% by mass or more, still more preferably 5% by mass or more, and more preferably 100% by mass or less, still more preferably 50% by mass or less.
The amount of the reducing substance used is more preferably within the range of 0.1 to 100% by mass, still more preferably 5 to 50% by mass, relative to 100% by mass of the polymer.
In the reacting the sulfur-containing polymer with a sulfonating agent and a reducing substance, the sulfonating agent and the reducing substance may be mixed in any order. For example, the following techniques may be employed: a technique (1) in which a sulfonating agent is mixed into the polymer, they are reacted to introduce a sulfonyl group into the aromatic hydrocarbon group, a reducing substance is mixed into the reaction product, and they are reacted to reduce the sulfonyl group to a thiol group; a technique (2) in which a sulfonating agent and a reducing substance are substantially simultaneously mixed into the polymer; and a technique (3) in which a reducing substance is mixed into the sulfur-containing polymer, followed by mixing a sulfonating agent into the polymer. Preferred among these is the technique (1).
The reacting the sulfur-containing polymer with a sulfonating agent and a reducing substance is preferably

performed in a solvent.

Examples of the solvent include sulfoxide or sulfone solvents such as dimethylsulfoxide and sulfolane; amide solvents such as N-methylpyrrolidone and N,N-dimethylformamide; ethers such as tetrahydrofuran, diethyl ether, and cyclopentyl methyl ether, chlorinated hydrocarbons such as chloromethane, chloroform, carbon tetrachloride, 1,2-dichloroethane, tetrachloroethylene, 1,1,2,2-tetrachloroethane, chlorobenzene, 1,2-dichlorobenzene, and 1,3-dichlorobenzene; organic solvents such as carbonyl compounds (e.g., cyclohexanone); organic solvents such as esters (e.g., ethyl acetate); and water. One or more of these may be used. Among these, sulfoxide solvents are more preferred, with sulfolane being still more preferred.

In the reacting the sulfur-containing polymer with a sulfonating agent and a reducing substance, the amount of the solvent used is preferably 0.5 to 50000 parts by mass, more preferably 10 to 5000 parts by mass, relative to 100 parts by mass of the sulfur-containing polymer.

In the reacting the sulfur-containing polymer with a sulfonating agent and a reducing substance, the reaction temperature may be any temperature at which the sulfonation reaction and the reduction reaction proceed. The reaction temperature is preferably -20°C to 250°C, more preferably - 5°C or higher, still more preferably 5°C or higher. To reduce side reactions, the reaction temperature is more preferably 150°C or lower, still more preferably 80°C or lower. The reaction temperature is more preferably within the range of -5°C to 150°C, still more preferably 5°C to 80°C.

In the reacting the sulfur-containing polymer with a sulfonating agent and a reducing substance, the reaction duration is not limited, and is preferably 0.1 to 100 hours, more preferably 0.5 hours or more, still more preferably 2 hours or more. From the viewpoint of excellent productivity, the reaction duration is more preferably 50 hours or less, still more preferably 20 hours or less. The reaction duration is more preferably within the range of 0.5 to 50 hours, still more preferably 2 to 20 hours.

(2) Purification and/or oxidation

The polymer composition containing the sulfur-containing polymer obtained in the polymerization contains at least the residue of the catalyst such as an iron-containing substance used in the polymerization. The amount of the residue is preferably reduced from the viewpoint of the heat resistance or the like of the resulting polymer. In a preferred embodiment of the production method of the present invention, the production method of the present invention further includes purification.

The oxidation is oxidizing the sulfur-containing polymer obtained in the polymerization. By oxidizing the sulfur-containing polymer, the sulfur atom of the sulfide group (-S-) in the main chain of the sulfur-containing polymer is oxidized to form "-SO-" or "-$SO_2$-", whereby a sulfur-containing polymer in which the proportion of a structural unit (B) and/or a structural unit (C), which will be described later, is high can be obtained. In the presence of the structural unit (B) and/or (C), or at a high proportion of the structural unit (B) and/or (C), the refractive index, solubility, and the like can be controlled. In a preferred embodiment of the production method of the present invention, the production method of the present invention further includes oxidation.

The oxidizing the polymer may be performed before or after the purification as long as it is performed after the polymerization. Preferably, it is performed after the purification.

The purification is described.

The purification may be performed by a conventionally known purification technique. For example, a reprecipitation technique is preferably used. A non-limiting example of the reprecipitation technique is a technique in which the polymer composition is added dropwise into hydrochloric acid-acidified methanol for precipitation of a polymer, the polymer is filtered to obtain a precipitate, and the precipitate is washed with water or a lower alcohol such as methanol. The purification technique is preferably performed after the oxidation, whereby components and the like derived from the oxidant used in the oxidation can also be removed.

The purification may be performed by a technique using a conventionally known adsorbent such as activated carbon, so that components derived from the oxidant used in the oxidation, impurity components derived from the polymerization, and similar other components can be removed. Preferably, the reprecipitation technique and the method using an adsorbent are used in combination.

The purification may be performed at any time and may be performed either before or after the oxidation. In other words, the purified polymer may be subjected to the oxidation, or a composition containing the oxidized polymer may be subjected to the purification. In particular, when the production method of the present invention includes the oxidation, a composition containing the polymer that has been subjected to both the polymerization and the oxidation is preferably subjected to the purification. Thereby, a sulfur-containing polymer containing few impurities derived from the raw materials and the like used in the steps can be obtained.

When the method for producing a sulfur-containing polymer of the present invention includes reacting the sulfur-containing polymer with a sulfonating agent and a reducing substance and purification, the purification may be performed either before or after the reacting the sulfur-containing polymer with a sulfonating agent and a reducing substance. To

obtain a sulfur-containing polymer containing few impurities derived from the raw materials and the like used in the steps, the purification is preferably performed after the reacting the sulfur-containing polymer with a sulfonating agent and a reducing substance.

When the method for producing a sulfur-containing polymer of the present invention includes reacting the sulfur-containing polymer with a sulfonating agent and a reducing substance and the oxidation, any of these steps may be performed first. To remove the iron catalyst and reduce side reactions, the oxidation is preferably performed first.

The oxidation is described.

The oxidation is oxidizing the polymer obtained in the polymerization. The polymer produced in the polymerization can be oxidized by an oxidation reaction using an oxidant.

The oxidation preferably includes heating a composition containing the sulfur-containing polymer obtained in the polymerization and an oxidant. Before being subjected to the oxidation, the sulfur-containing polymer may or may not be purified by the purification. The composition to be subjected to an oxidation reaction in the oxidation may be prepared by mixing an oxidant with the polymer composition obtained in the polymerization, or by subjecting the polymer composition to purification and mixing the purified polymer with an oxidant.

The oxidant is not limited and may be any of known oxidants. Examples thereof include quinone compounds, perbenzoic acid, m-chloroperbenzoic acid, lead tetraacetate, thallium acetate, tetracyanoquinodimethane, tetracyanoethylene, cerium (IV) acetylacetonate, manganese (III) acetylacetonate, peroxides, chloric acid, hypochlorous acid, hypochlorite, and compounds capable of generating hypochlorous acid.

In particular, to moderately oxidize the sulfur atom of the sulfide group (-S-) in the main chain of the polymer to form a sulfoxide (sulfinyl group) (-SO-), the oxidant is preferably at least one compound selected from the group consisting of peroxides, chloric acid, hypochlorous acid, hypochlorite, and compounds capable of generating hypochlorous acid.

Examples of the peroxides include m-chloroperbenzoic acid, hydrogen peroxide, ammonium persulfate, sodium persulfate, peracetic acid, and t-butylhydroperoxide.

Of these, the oxidant is preferably a peroxide, more preferably m-chloroperbenzoic acid or hydrogen peroxide. To reduce or prevent oxidation to a sulfonyl ($-SO_2-$) caused by an excessive amount of oxidant, the oxidant is still more preferably m-chloroperbenzoic acid.

When the oxidant is hydrogen peroxide, to reduce or prevent precipitation of the sulfur-containing polymer, a phase transfer catalyst such as trifluoroacetone is preferably used while the amount of water is reduced.

The oxidant is also preferably at least one compound selected from the group consisting of hypochlorous acid, hypochlorite, and compounds capable of generating hypochlorous acid.

The oxidant may be one of these alone or may include two or more of these in combination.

The amount of the oxidant added may be any amount that allows the oxidation reaction of the sulfur atoms to proceed for providing a target polymer. Typically, the amount is preferably 1 to 1000 mol, more preferably 10 to 500 mol, still more preferably 100 to 400 mol, per mole of the sulfur atoms in the sulfur-containing polymer.

The oxidation reaction may be performed at any reaction temperature at which the desired oxidation reaction proceeds. To allow the oxidation reaction to easily proceed, the reaction temperature is preferably 0°C to 200°C, more preferably 10°C or higher, still more preferably 15°C or higher. To reduce or prevent side reactions, the reaction temperature is more preferably 180°C or lower, still more preferably 150°C or lower.

The oxidation reaction may be performed for any duration. The reaction duration is typically 0.1 to 100 hours, preferably 1 to 80 hours, more preferably 5 to 50 hours, still more preferably 10 to 24 hours.

To oxidize the sulfur atoms in the sulfur-containing polymer to $-SO_2-$, the reaction is performed for a longer duration than the above-described reaction duration. In this case, the amount of the oxidant may be any amount that allows the desired oxidation reaction of the sulfur atoms to proceed. The amount of the oxidant is typically preferably 1.5 to 100 mol, more preferably 2 to 50 mol, still more preferably 2 to 10 mol, per mole of the sulfur atoms in the polymer.

In the oxidation reaction, a solvent may be used. Preferred examples of the solvent to be used include the same solvents as those used in the polymerization.

Since the sulfur-containing polymer obtained by the oxidation may contain a residual acid or other components, the polymer is preferably subjected to the purification.

The method for producing a sulfur-containing polymer may include a different step other than the polymerization, the reacting the sulfur-containing polymer with a sulfonating agent and a reducing substance, the purification, and the oxidation. Examples of the different step include ripening, neutralization, dilution, drying, concentration, solvent replacement, and dissolution. These steps may be performed by known methods.

The above-described production method of the present invention can produce a sulfur-containing polymer which has few by-products in the polymerization reaction and little effect caused by the catalyst residue used, on optical properties or other properties. Such a sulfur-containing polymer obtained by the production method of the present invention may be used alone or as a sulfur-containing polymer composition combined with other components such as inorganic particles. The polymer alone and composition can be used for various applications such as an optical material

application, especially for optical applications requiring a high refractive index.

2. Preferred examples of sulfur-containing polymer obtained by production method of the present invention

Preferred examples of the sulfur-containing polymer obtained by the production method of the present invention are described.

In the production method of the present invention, the monomer component containing a diaryl disulfide compound represented by the formula (1) and/or a thioaryl compound represented by the formula (2), which is described as a preferred monomer component, is used. Thereby, as a preferred sulfur-containing polymer, a sulfur-containing polymer can be obtained which contains at least one structural unit selected from the group consisting of a structural unit (A) represented by the following formula (3), a structural unit (B) represented by the following formula (4), and a structural unit (C) represented by the following formula (5), for example.

As the preferred sulfur-containing polymer, more preferred is a sulfur-containing polymer containing a plurality of at least one structural unit selected from the group consisting of a structural unit (A) represented by the following formula (3), a structural unit (B) represented by the following formula (4), and a structural unit (C) represented by the following formula (5). Also, as the preferred sulfur-containing polymer, more preferred is a sulfur-containing polymer containing at least one structural unit, as a repeating unit, selected from the group consisting of a structural unit (A) represented by the following formula (3), a structural unit (B) represented by the following formula (4), and a structural unit (C) represented by the following formula (5).

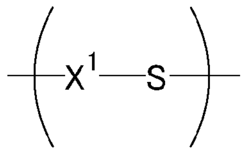 (3)

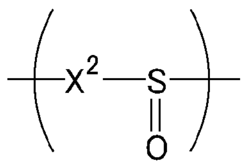 (4)

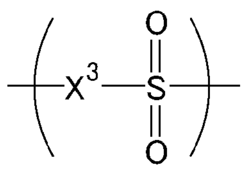 (5)

In the formulas (3) to (5), $X^1$, $X^2$, and $X^3$ are the same as or different from each other and each represent a divalent aromatic hydrocarbon group optionally having a substituent.

In other words, preferred embodiments of the production method of the present invention include a method for producing a sulfur-containing polymer containing at least one structural unit selected from the group consisting of a structural unit (A) represented by the formula (3), a structural unit (B) represented by the formula (4), and a structural unit (C) represented by the formula (5) using a monomer component containing a diaryl disulfide compound represented by the formula (1) and/or a thioaryl compound represented by the formula (2) as a monomer component in the production method of the present invention. Further, preferred embodiments of the sulfur-containing polymer obtained by the production method of the present invention include a sulfur-containing polymer containing at least one structural unit selected from the group consisting of a structural unit (A) represented by the formula (3), a structural unit (B) represented by the formula (4), and a structural unit (C) represented by the formula (5).

The preferred sulfur-containing polymers obtained by the preferred embodiments of the production method of the present invention are described.

As described below, the present invention encompasses a sulfur-containing polymer containing at least one structural unit selected from the group consisting of a structural unit (A) represented by the formula (3), a structural unit (B) represented by the formula (4), and a structural unit (C) represented by the formula (5), and containing iron in an amount of 0.001 to 100000 ppm in 100% by mass of the sulfur-containing polymer. The description and preferred embodiments of the preferred sulfur-containing polymers obtained by the preferred embodiments of the production

method of the present invention, which are described below, apply to the sulfur-containing polymer of the present invention containing at least one structural unit selected from the group consisting of the structural units (A), (B), and (C), and containing iron in an amount of 0.001 to 100000 ppm in 100% by mass of the sulfur-containing polymer.
First, the structural units in the preferred sulfur-containing polymers obtained by the preferred embodiments of the production method of the present invention are described.

<Structural unit (A)>

In the structural unit (A) represented by the formula (3), $X^1$ is a divalent aromatic hydrocarbon group optionally having a substituent.
Examples of the divalent aromatic hydrocarbon group include C6-C40 aromatic hydrocarbon groups such as phenylene, naphthylene, anthrylene, triphenylene, biphenylene, and phenanthrylene groups. Preferred among these divalent aromatic hydrocarbon groups are C6-C40 aromatic hydrocarbon groups such as phenylene, naphthylene, anthrylene, biphenylene, and triphenylene groups, with a phenylene group being more preferred for reducing the light dispersion of the polymer.
The substituent optionally contained in the divalent aromatic hydrocarbon group for $X^1$, the number of the substituents, and preferred embodiments thereof are the same as those for the substituent (A) optionally contained in the monovalent aromatic hydrocarbon group for $A^1$ in the formula (1).
To further increase the refractive index, the structural unit (A) is preferably a structural unit (A-1) represented by the following formula (3-1):

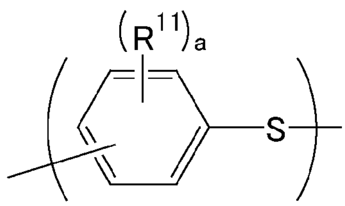

(3-1)

wherein $R^{11}$s are the same as or different from each other and each represent an alkyl group, an alkoxy group, an aryl group, an aralkyl group, or a sulfur-containing substituent, each of which optionally has a substituent; a reactive functional group; or a halogen atom, and the symbol "a" represents the number of $R^{11}$ and is an integer of 0 to 4.
When multiple $R^{11}$ are present, they may be the same as or different from each other.
Preferred embodiments of the structural unit (A-1) represented by the formula (3-1) include a structural unit represented by the following formula (3-1-1):

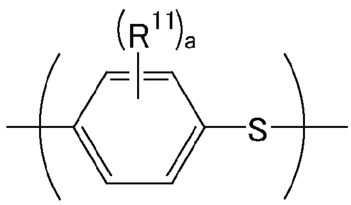

(3-1-1)

wherein $R^{11}$ and a are the same as those in the formula (3-1) .
The alkyl group, the alkoxy group, the aryl group, the aralkyl group, or the sulfur-containing substituent, each of which optionally has a substituent; the reactive functional group; or the halogen atom, for $R^{11}$ in the formulas (3-1) and (3-1-1), and preferred embodiments thereof are the same as those for the substituent optionally contained in the divalent aromatic hydrocarbon group in the formula (3). To further increase the refractive index, $R^{11}$ is still more preferably a methyl group or a thioalkyl group, particularly preferably a methyl group.
In the formulas (3-1) and (3-1-1), the symbol "a" represents the number of substituents $R^{11}$ and is an integer of 0 to 4. To further increase the refractive index, a is preferably 1 to 3, more preferably 1 or 2, still more preferably 1.

<Structural unit (B)>

In the structural unit (B) represented by the formula (4), $X^2$ represents a divalent aromatic hydrocarbon group optionally having a substituent. Preferred examples of the divalent aromatic hydrocarbon group for $X^2$ include the groups listed for the divalent aromatic hydrocarbon group for $X^1$.

Preferred examples of the substituent optionally contained in the divalent aromatic hydrocarbon group for $X^2$ include the groups listed for the substituent optionally contained in the divalent aromatic hydrocarbon group for $X^1$ in the formula (3). The divalent aromatic hydrocarbon group for $X^2$ and the substituent therein may be the same as or different from the divalent aromatic hydrocarbon group for $X^1$ in the formula (3) and the substituent therein.

The structural unit (B) is preferably a structural unit (B-1) represented by the following formula (4-1) because of the high polarity owing to the solubility and the like of the structural unit (B-1).

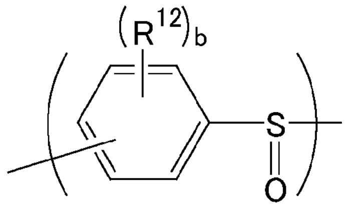

(4-1)

In the formula, $R^{12}$s are the same as or different from each other and each represent an alkyl group, an alkoxy group, an aryl group, an aralkyl group, or a sulfur-containing substituent, each of which optionally has a substituent; a reactive functional group; or a halogen atom, and b represents the number of $R^{12}$ and is an integer of 0 to 4.

When multiple $R^{12}$ are present, they may be the same as or different from each other.

Preferred embodiments of the structural unit (B-1) represented by the formula (4-1) include a structural unit represented by the following formula (4-1-1):

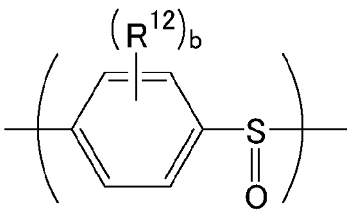

(4-1-1)

wherein $R^{12}$ and b are the same as those in the formula (4-1) .

Examples of the alkyl group, the alkoxy group, the aryl group, the aralkyl group, or the sulfur-containing substituent, each of which optionally has a substituent; the reactive functional group; or the halogen atom, for $R^{12}$ in the formulas (4-1) and (4-1-1), include the groups listed for $R^{11}$ in the formula (3-1). Preferred embodiments of $R^{12}$ are the same as those of $R^{11}$ in the formula (3-1). To further increase the refractive index, $R^{12}$ is more preferably a methyl group or a thioalkyl group, particularly preferably a methyl group.

In the formulas (4-1) and (4-1-1), b represents the number of substituents $R^{12}$ and is an integer of 0 to 4. To further increase the refractive index, b is preferably 1 to 3, more preferably 1 or 2, still more preferably 1.

<Structural unit (C)>

In the structural unit (C) represented by the formula (5), $X^3$ is a divalent aromatic hydrocarbon group optionally having a substituent. Preferred examples of the divalent aromatic hydrocarbon group for $X^3$ include the groups listed for the divalent aromatic hydrocarbon group for $X^1$ in the formula (3).

Preferred examples of the substituent optionally contained in the divalent aromatic hydrocarbon group for $X^3$ include the groups listed for the substituent optionally contained in the divalent aromatic hydrocarbon group for $X^1$ in the formula (3).

The divalent aromatic hydrocarbon group for $X^3$ and the substituent therein are the same as or different from the divalent aromatic hydrocarbon group for $X^1$ in the formula (3) or $X^2$ in the formula (4) and the substituent therein.

To achieve high transparency, the structural unit (C) is preferably a structural unit (C-1) represented by the following formula (5-1):

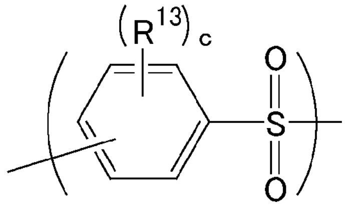

(5-1)

wherein $R^{13}$s are the same as or different from each other and each represent an alkyl group, an alkoxy group, an aryl group, an aralkyl group, or a sulfur-containing substituent, each of which optionally has a substituent; a reactive functional group; or a halogen atom, and c represents the number of $R^{13}$ and is an integer of 0 to 4.

When multiple $R^{13}$ are present, they may be the same as or different from each other.

Preferred embodiments of the structural unit (C-1) represented by the formula (5-1) include a structural unit represented by the following formula (5-1-1):

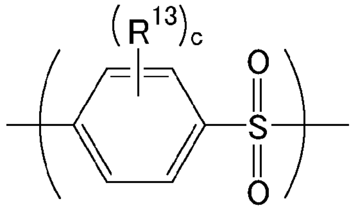

(5-1-1)

wherein $R^{13}$ and c are the same as those in the formula (5-1) .

Examples of the alkyl group, the alkoxy group, the aryl group, the aralkyl group, or the sulfur-containing substituent, each of which optionally has a substituent; the reactive functional group; or the halogen atom, for $R^{13}$ in the formulas (5-1) and (5-1-1), include the groups listed for $R^{11}$. Preferred embodiments of $R^{13}$ are also the same as those of $R^{11}$ in the formula (3-1). To further increase the refractive index, $R^{13}$ is more preferably a methyl group or a thioalkyl group, particularly preferably a methyl group.

In the formulas (5-1) and (5-1-1), c represents the number of substituents $R^{13}$ and is an integer of 0 to 4. To further increase the refractive index, c is preferably 1 to 3, more preferably 1 or 2, still more preferably 1.

A monomer component containing a diaryl disulfide compound represented by the formula (1) and/or a thioaryl compound represented by the formula (2) is polymerized, whereby a sulfur-containing polymer having at least one structural unit selected from the group consisting of the structural units (A), (B), and (C) as a repeating unit. In the polymer, the proportion of the structural unit (A) typically tends to be higher than each of the proportions of the other structural units. For example, in the sulfur-containing polymer obtained in the polymerization, the proportion of the structural unit (A) is preferably 50 to 100 mol%, more preferably 80 to 100 mol%, still more preferably 95 to 100 mol%, based on 100 mol% of all structural units of the polymer.

In the polymer, the total proportion of the structural unit (B) and the structural unit (C) is preferably 0 to 50 mol%, more preferably 0 to 20 mol%, still more preferably 0 to 5 mol%, based on 100 mol% of all structural units.

In the preferred sulfur-containing polymers obtained by the preferred embodiments of the production method of the present invention, the ratio of the structural units (A), (B), and (C) can be adjusted by selecting the conditions of the polymerization reaction and can also be adjusted by the oxidation.

The preferred sulfur-containing polymers obtained by the preferred embodiments of the production method of the present invention may each contain only one of the structural units (A), (B), and (C), two of the structural units, or the three structural units.

Also, the preferred sulfur-containing polymers obtained by the preferred embodiments of the production method of the present invention may each contain one type of a structural unit corresponding to the structural unit (A) or two or more types of structural units each corresponding to the structural unit (A). The same applies to the structural units (B) and (C).

When the preferred sulfur-containing polymers obtained by the preferred embodiments of the production method of the present invention each contain two or more types of structural units, the sulfur-containing polymer may be an alternating copolymer, a block copolymer, or a random copolymer, of these structural units.

The embodiments and the proportions of the structural units of the preferred sulfur-containing polymers obtained by the preferred embodiments of the production method of the present invention can be appropriately selected according to the purposes and applications of the polymer. For example, to achieve a higher refractive index, the preferred sulfur-containing polymers obtained by the preferred embodiments of the production method of the present invention each preferably contain the structural unit (A), more preferably as a main component. To achieve both high solubility and a

high refractive index, the preferred sulfur-containing polymers obtained by the preferred embodiments of the production method of the present invention each preferably contain the structural unit (B), more preferably as a main component. To achieve both high transparency and a high refractive index, the preferred sulfur-containing polymers obtained by the preferred embodiments of the production method of the present invention each preferably contain the structural unit (C), more preferably as a main component.

In this respect, to achieve a high refractive index, in the preferred sulfur-containing polymers obtained by the preferred embodiments of the production method of the present invention, the proportion of the structural unit (A) is preferably 1 to 100 mol%, more preferably 10 to 100 mol%, still more preferably 50 to 100 mol%, based on 100 mol% of all structural units of the polymer. In this case, the total proportion of the structural unit (B) and the structural unit (C) is preferably 0 to 99 mol%, more preferably 0 to 90 mol%, still more preferably 0 to 50 mol%, based on 100 mol% of all structural units.

In the preferred sulfur-containing polymers obtained by the preferred embodiments of the production method of the present invention, from the viewpoint of high polarity owing to solubility, the proportion of the structural unit (B) is preferably 1 to 100 mol%, more preferably 10 to 100 mol%, still more preferably 50 to 100 mol%, based on 100 mol% of all structural units of the polymer. In this case, the total proportion of the structural unit (A) and the structural unit (C) is preferably 0 to 99 mol%, more preferably 0 to 90 mol%, still more preferably 0 to 50 mol%, based on 100 mol% of all structural units.

In the preferred sulfur-containing polymers obtained by the preferred embodiments of the production method of the present invention, to achieve high transparency, the proportion of the structural unit (C) is preferably 1 to 100 mol%, more preferably 10 to 100 mol%, still more preferably 50 to 100 mol%, based on 100 mol% of all structural units of the polymer. In this case, the total proportion of the structural unit (A) and the structural unit (B) is preferably 0 to 99 mol%, more preferably 0 to 90 mol%, still more preferably 0 to 50 mol%, based on 100 mol% of all structural units.

In the preferred sulfur-containing polymers obtained by the preferred embodiments of the production method of the present invention, the total proportion of the structural units (A), (B), and (C) is preferably 50 mol% or more, more preferably 80 mol% or more, still more preferably 90 mol% or more, further preferably 95 mol% or more, particularly preferably 100 mol%, based on 100 mol% of all structural units of the polymer.

In the preferred sulfur-containing polymers obtained by the preferred embodiments of the production method of the present invention, the structural unit (A), the structural unit (B), and the structural unit (C) may each constitute the main chain or a side chain of the polymer, and preferably constitutes the main chain.

The preferred sulfur-containing polymers obtained by the preferred embodiments of the production method of the present invention may each contain a structural unit (D) different from the structural unit (A), the structural unit (B), and the structural unit (C). The structural unit (D) may constitute the main chain or a side chain of the sulfur-containing polymer.

An example of the structural unit (D) is a structural unit containing at least any of the reactive functional groups described above.

An example of a monomer capable of introducing the structural unit (D) is a monomer having a polymerizable double bond and any of the reactive functional groups described above. Examples of the polymerizable double bond include a vinyl group, a (meth)acryloyl group, an allyl group, and a methallyl group. Preferred among these is a (meth)acryloyl group.

Examples of the monomer having a polymerizable double bond and any of the reactive functional groups described above include carboxy group-containing (meth)acrylates such as 2-carboxyethyl (meth)acrylate, 2-carboxypropyl (meth)acrylate, 3-carboxypropyl (meth)acrylate, and 4-carboxybutyl (meth)acrylate; phosphate group-containing (meth)acrylates such as 2-(meth)acryloyloxyethyl acid phosphate; epoxy group-containing (meth)acrylates such as glycidyl (meth)acrylate and 3,4-epoxycyclohexylmethyl (meth)acrylate; and vinyl ether group-containing (meth)acrylates such as 2-(2-vinyloxyethoxy)ethyl (meth)acrylate.

The proportion of the structural unit (D) is preferably 0 to 80 mol%, more preferably 0 to 50 mol%, still more preferably 0 to 20 mol%, further preferably 0 to 10 mol%, particularly preferably 0 to 5 mol%, based on 100 mol% of all structural units of the polymer.

The sulfur-containing polymer containing the structural unit (D) is typically produced as follows: a sulfur-containing polymer containing at least one structural unit selected from the group consisting of the structural unit (A), the structural unit (B), and the structural unit (C) as a repeating unit is produced by any of the preferred embodiments of the production method of the present invention, and, for example, the reactive functional groups in the structural units are reacted with the monomer capable of introducing the structural unit (D). In this case, a sulfur-containing polymer containing the structural unit (D) in a side chain can be obtained.

The preferred sulfur-containing polymers obtained by the preferred embodiments of the production method of the present invention may each have a chain structure, a cyclic structure, or a mixture thereof. In particular, the preferred sulfur-containing polymers obtained by the preferred embodiments of the production method of the present invention each preferably mainly contain a polymer having a chain structure from the viewpoint of excellent mechanical properties

and excellent solubility in solvents. Specifically, the amount of the polymer having a chain structure in the preferred sulfur-containing polymers obtained by the preferred embodiments of the production method of the present invention is preferably 50% by mass or more, more preferably 80% by mass or more, still more preferably 95% by mass or more, particularly preferably 98% by mass or more, based on 100% by mass of the sulfur-containing polymer.

The polymer having a cyclic structure herein refers to a polymer forming a cyclic structure as a whole. The polymer having a cyclic structure in the structure, when having a terminal end in the main chain of the polymer and forming a chain structure as a whole, is classified into the "polymer having a chain structure".

In the preferred sulfur-containing polymers obtained by the preferred embodiments of the production method of the present invention, the amount of iron in the sulfur-containing polymer (solids) is preferably 100000 ppm or less. The amount of iron in the polymer is more preferably 10000 ppm or less, still more preferably 1000 ppm or less, particularly preferably 100 ppm or less. When containing iron within such a range, the sulfur-containing polymer tends to have excellent visible light transmittance.

The amount of iron in the sulfur-containing polymer (solids) is preferably 0.001 ppm or more, more preferably 0.01 ppm or more, still more preferably 0.1 ppm or more, from the viewpoint that the molded article containing the sulfur-containing polymer tends to have excellent ultraviolet shielding properties and excellent toughness.

The amount of iron in each of the preferred sulfur-containing polymers obtained by the preferred embodiments of the production method of the present invention is preferably within the range of 0.001 to 100000 ppm, more preferably 0.01 to 10000 ppm, still more preferably 0.01 to 1000 ppm, particularly preferably 0.1 to 1000 ppm, most preferably 0.1 to 100 ppm.

The preferred sulfur-containing polymers obtained by the preferred embodiments of the production method of the present invention also each preferably contain such an amount of iron. The present invention encompasses such a sulfur-containing polymer.

In other words, the present invention encompasses a sulfur-containing polymer containing at least one structural unit selected from the group consisting of a structural unit (A), a structural unit (B), and a structural unit (C), and containing iron in an amount of 0.001 to 100000 ppm in 100% by mass of the sulfur-containing polymer.

The sulfur-containing polymer containing at least one structural unit selected from the group consisting of a structural unit (A), a structural unit (B), and a structural unit (C), and containing iron in an amount of 0.001 to 100000 ppm in 100% by mass of the sulfur-containing polymer is preferably one containing a plurality of at least one structural unit selected from the group consisting of the structural unit (A), the structural unit (B), and the structural unit (C). The sulfur-containing polymer is also preferably one containing, as a repeating unit, at least one structural unit selected from the group consisting of the structural unit (A), the structural unit (B), and the structural unit (C).

The amount of iron can be determined by the ICP emission spectroscopic analysis described above.

The preferred sulfur-containing polymers obtained by the preferred embodiments of the production method of the present invention each preferably have an element content ratio (O/S) between oxygen atoms O bonded to main-chain sulfur atoms S and the main-chain sulfur atoms S of 0.1 to 1.5. When the polymer has an element content ratio within the above range, the transparency and the refractive index are higher.

The main-chain sulfur atoms S specifically refer to, for example, the sulfur atom S of the -SO- in the main chain in the case of the structural unit (B). The main-chain sulfur atoms S refer to the sulfur atom S of -S- in the main chain in the case of the structural unit (A), and refers to the sulfur atom S of $-SO_2-$ in the main chain in the case of the structural unit (C).

The oxygen atoms bonded to main-chain sulfur atoms S specifically refer to the oxygen atom O of -SO- in the main chain in the case of the structural unit (B), and refers to the oxygen atom O of $-SO_2-$ in the main chain in the case of the structural unit (C), for example.

To further increase the transparency, the element content ratio (O/S) is more preferably 0.3 or more, still more preferably 0.5 or more. To further increase the refractive index, the element content ratio is more preferably 1.3 or less, still more preferably 1.1 or less.

In the preferred sulfur-containing polymers obtained by the preferred embodiments of the production method of the present invention, the element content ratio (O/S) is more preferably within the range of 0.3 to 1.3, still more preferably 0.5 to 1.1.

The element content ratio can be determined by measuring and evaluating the peak intensities of the 1s orbital (O1s) of the oxygen atom, the 1s orbital (C1s) of the carbon atom, and the 2p orbital (S2p) of the sulfur atom using an X-ray photoelectron spectrometer (XPS).

The preferred sulfur-containing polymers obtained by the preferred embodiments of the production method of the present invention each preferably have a weight average molecular weight (Mw) of 500 to 10000000. When having a weight average molecular weight within the above range, the polymer can be suitably used as optical materials. To improve the mechanical properties, the weight average molecular weight is more preferably 1000 or greater, still more preferably 3000 or greater, particularly preferably 10000 or greater. To reduce the melt viscosity, the weight average molecular weight is more preferably 1000000 or smaller, still more preferably 100000 or smaller.

The preferred sulfur-containing polymers obtained by the preferred embodiments of the production method of the present invention each more preferably have a weight average molecular weight (Mw) within the range of 1000 to 1000000, still more preferably 3000 to 100000, particularly preferably 10000 to 100000.

The preferred sulfur-containing polymers obtained by the preferred embodiments of the production method of the present invention each preferably have a degree of dispersion (weight average molecular weight/number average molecular weight) of 1 or more and 10 or less. When having a degree of dispersion within the above range, the polymer can be easily molded. To further improve the moldability, the degree of dispersion is more preferably 5 or less, still more preferably 3 or less.

The degree of dispersion (weight average molecular weight/number average molecular weight) of the sulfur-containing polymer is preferably in the range of 1 to 10, more preferably 1 to 5, still more preferably 1 to 3.

The weight average molecular weight and the number average molecular weight can be measured by a gel permeation chromatography (GPC) analysis. Specifically, they can be determined by the methods described in the EXAMPLES below. The degree of dispersion can be determined by dividing the weight average molecular weight by the number average molecular weight.

The preferred sulfur-containing polymers obtained by the preferred embodiments of the production method of the present invention each preferably have a glass transition temperature (Tg) of 80°C to 250°C. When having a glass transition temperature within the above range, the polymer can be easily molded and processed. To increase the heat resistance, the glass transition temperature is more preferably 90°C or higher, still more preferably 100°C or higher. To easily perform molding and processing, Tg is more preferably 200°C or lower.

The sulfur-containing polymer more preferably has a glass transition temperature (Tg) within the range of 90°C to 200°C, still more preferably 100°C to 200°C.

The glass transition temperature can be determined as follows: using a differential scanning calorimeter (DSC), a DSC curve is created with the temperature being increased from room temperature to 250°C (at a temperature-increasing rate of 10°C/min) in a nitrogen gas atmosphere, and evaluation is performed based on the intersection of the baseline and the tangent line at the inflection point of the curve.

The preferred sulfur-containing polymers obtained by the preferred embodiments of the production method of the present invention each preferably have a refractive index of 1.69 or higher. When having a refractive index within the above range, the polymer can be suitably used for wide applications, including optical materials (components), materials of machine parts, materials of electric and electronic parts, materials of automobile parts, materials for civil engineering and construction, molding materials, materials of paints and adhesives, and the like. The refractive index is more preferably 1.7 or higher, still more preferably 1.71 or higher.

The refractive index can be determined as follows: a 50-nm thick film is prepared using the polymer as a measurement sample and is subjected to measurement using the Na D line (589 nm) with a spectroscopic ellipsometer UVISEL (HORIBA Scientific Co., Ltd.).

The preferred sulfur-containing polymers obtained by the preferred embodiments of the production method of the present invention each preferably have an Abbe number of 10 or more. When having an Abbe number within the above range, the polymer can have low optical dispersion and can be used as an optical material suitable for lenses. The Abbe number is more preferably 15 or more, still more preferably 18 or more, further preferably 20 or more. To control light dispersion, the Abbe number is preferably 60 or less, more preferably 55 or less.

The range of the Abbe number of the sulfur-containing polymer is preferably 10 to 60, more preferably 15 to 60, still more preferably 18 to 55, particularly preferably 20 to 55.

The Abbe number can be determined as in the measurement of the refractive index as follows: a film is prepared using the polymer and is subjected to measurement of the refractive indices at the D line (589.3 nm), the F line (486.1 nm), and the C line (656.3 nm) with the same spectroscopic ellipsometer as above, and the Abbe number is determined using the following equation:

$$\text{Abbe number } (\nu D) = (nD - 1)/(nF - nC)$$

wherein nD, nF, and nC are the refractive indices at the Fraunhofer D line (589.3 nm), the Fraunhofer F line (486.1 nm), and the Fraunhofer C line (656.3 nm), respectively.

The preferred sulfur-containing polymers obtained by the preferred embodiments of the production method of the present invention each preferably have excellent visible light transmittance.

A sample prepared in the following way preferably has a parallel ray transmittance (Tb) at a wavelength of 400 nm of preferably 50% or more, more preferably 70% or more, still more preferably 75% or more.

The transmittance can be measured with a commercially available spectrophotometer such as a spectrophotometer (UV-visible-infrared spectrophotometer V-700 series, available from JASCO Corporation).

(Preparation of sample)

A laminate consisting of a colorless, transparent glass substrate and a 1-μm thin film of a sulfoxide-containing polymer formed on one side of the substrate is used as a measurement sample. The measurement sample can be prepared by coating one side of the colorless and transparent glass substrate with a solution in which a sulfur-containing polymer is dissolved in a solvent, followed by drying.

Specifically, the measurement sample is preferably prepared as follows: a solution is prepared by dissolving the sulfur-containing polymer in hexafluoro-2-propanol to a concentration of 5% by mass, and the solution is applied to one side of a glass substrate (Matsunami Glass Ind., Ltd., S1111) with excellent visible light transmission by spin coating at about 500 rpm for 60 seconds and dried at 100°C for 10 minutes to form a thin film (thickness 1 um).

Instead of hexafluoro-2-propanol, a different solvent may be used to dissolve the sulfur-containing polymer. An example of the different solvent is chloroform.

To obtain the 1-μm thick sample (thin film), the concentration of the sulfur-containing polymer in the solution and the rotation speed of spin coating can be appropriately changed. The concentration of the sulfur-containing polymer in the solution is preferably within the range of 5 to 15 mass%, and the rotation speed of spin coating is preferably within the range of 100 to 600 rpm.

The preferred sulfur-containing polymers obtained by the preferred embodiments of the production method of the present invention each preferably have excellent transmittance after heating. For example, when a sample prepared by the above-described method is heated at 260°C for 10 minutes in air, the sample after the heating preferably has a transmittance Ta (%) of 50% or more, more preferably 70% or more, still more preferably 80% or more. The transmittance (Ta) can be measured by the same method as for the transmittance (Tb).

In the preferred sulfur-containing polymers obtained by the preferred embodiments of the production method of the present invention, the absolute value of the difference between the transmittance (Ta) and the transmittance (Tb) is preferably 30% or less, more preferably 10% or less, still more preferably 5% or less, particularly preferably 1% or less.

3. Sulfur-containing polymer-containing composition

The sulfur-containing polymer obtained by the method for producing a sulfur-containing polymer of the present invention (hereinafter also referred to as a sulfur-containing polymer 1) can also be suitably used as a composition containing a different component other than the sulfur-containing polymer 1. The present invention encompasses such a sulfur-containing polymer-containing composition (hereinafter, also referred to as a composition 1 of the present invention) containing a sulfur-containing polymer obtained by the method for producing a sulfur-containing polymer of the present invention and a different component other than the sulfur-containing polymer.

The above-described sulfur-containing polymer of the present invention containing at least one structural unit selected from the group consisting of the structural units (A), (B), and (C), and containing iron in an amount of 0.001 to 100000 ppm in 100% by mass of the sulfur-containing polymer (hereinafter also referred to as a sulfur-containing polymer 2) can also be suitably used as a composition containing a different component other than the sulfur-containing polymer 2. The present invention also encompasses a sulfur-containing polymer-containing composition containing: such a sulfur-containing polymer of the present invention containing at least one structural unit selected from the group consisting of the structural units (A), (B), and (C), and containing iron in an amount of 0.001 to 100000 ppm in 100% by mass of the sulfur-containing polymer; and a different component other than the sulfur-containing polymer (hereinafter also referred to as a composition 2 of the present invention).

In the composition 1 of the present invention, the sulfur-containing polymer 1 and a different component other than the sulfur-containing polymer 1 may be present in any form. The sulfur-containing polymer 1 and a different component other than the sulfur-containing polymer 1 may be mixed, or the sulfur-containing polymer 1 and a different component other than the sulfur-containing polymer 1 may form a complex.

The composition 1 of the present invention may contain any component as the different component other than the sulfur-containing polymer 1. The different component may be appropriately selected from known components according to the purposes of use and applications of the composition of the present invention. Examples of the different component include sulfur-containing polymers different from the sulfur-containing polymer 1, inorganic particles, crosslinkable compounds, and solvents.

When the composition of the present invention contains inorganic particles as the different component, the various physical properties of the composition of the present invention, such as optical properties (e.g., refractive index), dielectric properties, and thermal conductivity can be controlled.

When containing a solvent as the different component, the composition of the present invention can have processability such as thin film formability.

When containing a crosslinkable compound as the different component, the composition of the present invention can have curability.

In the composition 2 of the present invention, the sulfur-containing polymer 2 and a different component other than the sulfur-containing polymer 2 may be present in the same forms as the sulfur-containing polymer 1 and a different component other than the sulfur-containing polymer 1 in the composition 1 of the present invention.

Examples of the different component other than the sulfur-containing polymer 2 in the composition 2 of the present invention include sulfur-containing polymers different from the sulfur-containing polymer 2, inorganic particles, crosslinkable compounds, and solvents. The effects of containing these other components are the same as the effects in the case of the composition 1 of the present invention.

The amount of the sulfur-containing polymer 1 in the composition 1 of the present invention depends on the type of the different component other than the sulfur-containing polymer 1, the purposes of use and applications, and the like. The amount is preferably 0.1 to 100% by mass, more preferably 1 to 80% by mass, still more preferably 10 to 70% by mass, based on 100% by mass of the composition 1 of the present invention.

In the composition 1 of the present invention, the amount of the sulfur-containing polymer 1 based on 100% by mass of the solids is preferably 1 to 100% by mass, more preferably 10 to 90% by mass, still more preferably 30 to 70% by mass. The solids encompass non-volatile substances such as the sulfur-containing polymer 1, sulfur-containing polymers different from the sulfur-containing polymer 1, and inorganic particles. The solids further encompass volatile compounds (e.g., the above-described crosslinkable compound) that can become solids such as cured products, films, molding materials, and the like through the reaction in the composition.

The same applies to the amount of the different component other than the sulfur-containing polymer 2 in the composition 2 of the present invention and the amount of the sulfur-containing polymer 2 based on 100% by mass of the solids of the composition 2 of the present invention.

Hereinafter, the compositions 1 and 2 of the present invention are collectively referred to as the composition of the present invention.

The amount of solids in the composition of the present invention is preferably 5 to 100% by mass, more preferably 10% by mass or more, still more preferably 20% by mass or more, based on 100% by mass of the total amount of the composition. The amount of solids in the composition of the present invention is preferably within the range of 10 to 100% by mass, more preferably 20 to 100% by mass, based on 100% by mass of the total amount of the composition.

When the composition is used as, for example, a coating composition, the amount of solids in the composition is preferably 5 to 60% by mass. The lower limit of the amount of solids in the composition is more preferably 10% by mass or more, still more preferably 20% by mass or more. The upper limit of the amount of solids in the composition is more preferably 50% by mass or less, still more preferably 40% by mass or less. When the composition of the present invention is used as a coating composition, the amount of solids in the composition is more preferably within the range of 10 to 50% by mass, still more preferably 20 to 40%, based on 100% by mass of the total amount of the composition.

When the composition of the present invention is used, for example, as a molding composition, the amount of solids in the composition is preferably 80 to 100% by mass, more preferably 90% by mass or more, still more preferably 95% by mass or more, particularly preferably 100% by mass. When the composition of the present invention is used as a molding composition, the amount of solids in the composition is more preferably within the range of 90 to 100% by mass, still more preferably 95 to 100% by mass, particularly preferably 100% by mass, based on 100% by mass of the total amount of the composition.

(1) Inorganic particle-containing composition

The composition of the present invention preferably contains inorganic particles. When the composition of the present invention contains inorganic particles, the various physical properties of the composition, such as optical properties (e.g., refractive index), dielectric properties, and thermal conductivity, are easily controlled. The composition of the present invention containing inorganic particles is also referred to as an inorganic particle-containing composition, which is included in preferred embodiments of the composition of the present invention.

Examples of materials constituting the inorganic particles include metals, inorganic oxides, inorganic nitrides, inorganic carbides, inorganic sulfides, and inorganic hydroxides. The inorganic particles may consist of one of these materials, or may contain two or more of these.

Examples of the metals include lithium, sodium, potassium, boron, magnesium, calcium, manganese, strontium, barium, titanium, zirconium, iron, cobalt, nickel, copper, zinc, aluminum, tin, silicon, cesium, and indium.

The inorganic oxides are preferably metal oxides containing metal elements. Examples of the metal oxides include a single metal oxide containing one metal element, a complex oxide containing two or more metal elements, and a solid solution oxide of a different element in the single metal oxide or the complex oxide.

The different element may be a metal element or a non-metal element such as nitrogen or fluorine, excluding oxygen. Examples of the metal element include the metal elements described above.

Examples of the single metal oxide include magnesium oxide, calcium oxide, strontium oxide, barium oxide, titanium oxide, zinc oxide, cerium oxide, silicon oxide, tin oxide, zirconium oxide, aluminum oxide, and indium oxide.

Examples of the complex oxide include perovskite-type complex oxides such as barium titanate, barium strontium titanate, strontium titanate, barium zirconium strontium titanate, barium zirconium titanate, and lead zirconate titanate; spinel-type complex oxides such as spinel and lithium titanate; and aluminum titanate.

Examples of the solid solution oxide include solid solution oxides of a different metal element and/or a non-metal element such as nitrogen or fluorine, excluding oxygen, in the single metal oxides or the complex oxides.

The inorganic nitrides are preferably metal nitrides, and examples thereof include boron nitride, carbon nitride, and aluminum nitride.

The inorganic carbides are preferably metal carbides, and examples thereof include silicon carbide, calcium carbide, titanium carbide, and boron carbide. The inorganic sulfides are preferably metal sulfides, and examples thereof include copper sulfide, zinc sulfide, and cadmium sulfide.

The inorganic hydroxides are preferably metal hydroxides, and examples thereof include aluminum hydroxide, magnesium hydroxide, and barium hydroxide.

Preferred among the materials constituting the inorganic particles are inorganic oxides because the inorganic oxides are wide-band gap (visible light transparent) materials. More preferred are metal oxides. The inorganic particles are still more preferably oxides containing Ti, Zr, Ce, Zn, In, Al, Si, or Sn as a main component of the metal element. This is because such oxides have no or little absorption in the visible light region and thus a composition less susceptible to coloration by the inorganic particles is easily obtained. Particularly preferred are titanium oxide ($TiO_2$), zirconium oxide ($ZrO_2$), cerium oxide ($CeO_2$), zinc oxide (ZnO), indium oxide ($In_2O_3$), aluminum oxide ($Al_2O_3$), silicon oxide ($SiO_2$), and tin oxide ($SnO_2$).

From the viewpoint of easy control of the refractive index of the composition of the present invention and reduction in the linear expansion of the composition of the present invention, more preferred among the materials constituting the inorganic particles are zirconium oxide, titanium oxide, and silicon dioxide. To improve the refractive index of the composition of the present invention, zirconium oxide and titanium oxide are more preferred.

Perovskite-type complex oxides are preferred because they have a high dielectric constant and can easily impart properties such as ferroelectric properties and piezoelectric properties to the composition of the present invention.

Boron nitride, aluminum hydroxide, and aluminum titanate are preferred because they have high thermal conductivity and can easily improve the heat dissipation property of the composition of the present invention.

To impart antistatic properties or conductivity to the composition of the present invention while reducing coloration due to the addition of inorganic particles, the inorganic particles are preferably solid solution oxides of different metal elements or added elements such as fluorine in zinc oxide (ZnO), indium oxide ($In_2O_2$), or tin oxide ($SnO_2$). The inorganic particles are more preferably a solid solution of In, Al, or Ga in zinc oxide, a solid solution of Sn or Ti in indium oxide, or a solid solution of Sb or F in tin oxide, for example.

The inorganic particles may have any shape and may have an irregular, granular, plate-like, columnar, or needle-like shape, or another shape. The inorganic particles preferably have a granular shape. The inorganic particles may be surface-treated. The surface treatment may be performed by any technique as long as it does not affect the effects of the present invention. Examples of the technique include known techniques such as using a silane coupling agent, reacting a compound having a phosphate group, and reacting a compound having a carboxylate group.

The granular shape refers to an unbiased shape having an aspect ratio of 2 or less.

The inorganic particles preferably have an average particle size of 1 nm or more and 1000 nm or less. Inorganic particles having an average particle size within the above range can improve the light transmittance in the visible light region and infrared region. The average particle size of the inorganic particles is more preferably 5 nm or more, still more preferably 10 nm or more, while more preferably 100 nm or less, still more preferably 50 nm or less.

The average particle size of the inorganic particles is preferably within the range of 1 to 1000 nm, more preferably 5 to 100 nm, still more preferably 10 to 50 nm.

The average particle size is determined as follows: the inorganic particles are observed by SEM (at magnifications within the range of 1000 to 100000 times, preferably at a magnification of 10000 times); the image obtained is analyzed to determine the particle sizes (circular area equivalent diameters) of about 10 to 1000 particles (primary particles); and a 50% particle size in the particle size distribution based on the number is evaluated. The image can be analyzed with known image analysis software (e.g., Mac-View available from Mountech Co., Ltd.).

The amount of the inorganic particles is not limited, and can be appropriately selected according to the purposes of use and applications of the inorganic particle-containing composition. For example, the amount of the inorganic particles is preferably 1 to 2000% by mass relative to 100% by mass of the sulfur-containing polymer (the sum of the sulfur-containing polymers 1 and 2 and a different sulfur-containing polymer) in the inorganic particle-containing composition. To easily achieve adjustment of the refractive index of the inorganic particle-containing composition or a film or cured product obtained from the composition and to easily achieve low linear expansion, the amount of the inorganic particles is more preferably 100% by mass or more, still more preferably 500% by mass or more, relative to 100% by mass of the sulfur-containing polymer in the inorganic particle-containing composition.

From the viewpoint of mechanical strength or other properties of the inorganic particle-containing composition

or a film or cured product obtained from the composition, the amount of the inorganic particles is more preferably 1000% by mass or less, still more preferably 800% by mass or less, relative to 100% by mass of the sulfur-containing polymer in the inorganic particle-containing composition.

The amount of the inorganic particles is more preferably within the range of 100 to 1000% by mass, still more preferably 500 to 800% by mass, relative to 100% by mass of the sulfur-containing polymer in the inorganic particle-containing composition.

The inorganic particle-containing composition of the present invention may further contain a crosslinkable compound and/or a solvent, and the like. Preferred embodiments of the composition of the present invention include such an inorganic particle-containing composition containing these components.

Specific examples of the crosslinkable compound are listed in the below-described "(3) Curable composition", and specific examples of the solvent are listed in the below-described "(2) Solvent-containing composition".

(2) Solvent-containing composition

The composition of the present invention preferably contains a solvent. The composition of the present invention containing a solvent can have processability such as thin-film formability. The composition of the present invention containing a solvent is also referred to as a solvent-containing composition, which is included in preferred embodiments of the composition of the present invention.

Non-limiting examples of the solvent include halogen solvents such as dichloromethane, chloroform, carbon tetrachloride, 1,2-dichloroethane, tetrachloroethylene, 1,1,2,2-tetrachloroethane, chlorobenzene, 1,2-dichlorobenzene, and 1,3-dichlorobenzene; and non-halogen solvents such as nitromethane, nitrobenzene, benzonitrile, N-methylpyrrolidone, dimethylethylene urea, N,N-dimethylformamide, tetrahydrofuran, ethyl acetate, benzyl acetate, benzyl alcohol, cyclopentyl methyl ether, cyclohexanone, cyclopentanone, cycloheptanone, toluene, xylene, propylene glycol monomethyl ethyl ether acetate, methyl ethyl ketone, and sulfolane. One or more of these may be used.

Preferred among these are non-halogen solvents. In particular, the composition more preferably contains at least one solvent selected from the group consisting of cyclohexanone, cyclopentanone, propylene glycol monomethyl ethyl ether acetate, methyl ethyl ketone, toluene, xylene, tetrahydrofuran, and N-methylpyrrolidone.

The amount of the solvent in the solvent-containing composition of the present invention is preferably, but is not limited to, 10 to 20000% by mass, more preferably 100 to 10000% by mass, still more preferably 50 to 5000% by mass, relative to 100% by mass of the sulfur-containing polymer (the sum of the sulfur-containing polymers 1 and 2 and a different sulfur-containing polymer) in the solvent-containing composition.

The solvent-containing composition of the present invention may further contain a crosslinkable compound and/or inorganic particles, and the like. Preferred embodiments of the composition of the present invention include such a solvent-containing composition containing these components.

(3) Curable composition

The composition of the present invention can be used both as a thermoplastic composition and as a curable composition. It is preferably used as a curable composition. When being used as a curable composition, the composition of the present invention preferably contains a crosslinkable compound. When the composition of the present invention contains a crosslinkable compound, the composition can have curability and a film or the like obtained from the composition can have improved properties such as mechanical strength and heat resistance. In other words, preferred embodiments of the composition of the present invention include such a curable composition containing a crosslinkable compound.

The crosslinkable compound preferably has, in the molecule, two or more groups capable of reacting with the reactive functional groups in the sulfur-containing polymer. In the crosslinkable compound, the two or more groups capable of reacting with the reactive functional groups may be the same as or different from each other.

The amount of the crosslinkable compound in the curable composition is not limited. The amount of the crosslinkable compound is preferably 0.1 to 99% by mass, more preferably 10 to 90% by mass, still more preferably 20 to 80% by mass, relative to 100% by mass of the sulfur-containing polymer (the sum of the sulfur-containing polymers 1 and 2 and a different sulfur-containing polymer) in the curable composition.

The curable composition preferably further contains a polymerization initiator. The polymerization initiator may be appropriately selected from conventionally known thermal polymerization initiators and conventionally known photopolymerization initiators. Preferred examples of the polymerization initiator include radical polymerization initiators, cationic polymerization initiators, and anionic polymerization initiators.

The amount of the polymerization initiator is not limited. For example, it is preferably in the range of 0.01 to 20% by mass, more preferably 0.05 to 10% by mass, still more preferably 0.1 to 5% by mass, relative to 100% by mass of the polyfunctional polymerizable monomer.

The curable composition may be cured by any technique. Examples of the technique include conventionally known techniques such as a technique involving heating (thermosetting) and a technique using active energy ray.

In the case of the technique involving heating, the heating temperature is not limited and is preferably 50°C to 400°C, more preferably 100°C to 300°C. The heating duration is not limited and is preferably 0.01 to 10 hours, more preferably 0.1 to 2 hours.

In the case of the technique using active energy ray, the active energy ray is preferably UV light or an electron beam, more preferably UV light. When UV irradiation is performed, the UV dose (cumulative exposure) is not limited and is preferably within the range of 0.001 to 100 J/$cm^2$, more preferably 0.01 to 50 J/$cm^2$, still more preferably 0.05 to 10 J/$cm^2$. Examples of a light source include various types of mercury lamps. Ultra-high pressure mercury lamps and metal halide lamps are preferred.

These curing methods can provide a cured product of the curable composition.

The curable composition may further contain the inorganic particles, the solvent, and the like. Preferred embodiments of the composition of the present invention include the curable composition further containing the inorganic particles and/or the solvent.

The present invention encompasses a cured product obtained from the curable composition. As described above, various preferred embodiments of the composition of the present invention can be given by varying the different component.

(4) Coating composition and molding composition

The composition of the present invention can be suitably used as a coating composition and a molding composition.

The composition of any of the preferred embodiments of the present invention can be used as the coating composition. For example, the coating composition is preferably the solvent-containing composition. To easily obtain a film made of a cured product, the coating composition is more preferably the solvent-containing composition containing a crosslinkable compound. The coating composition is still more preferably the solvent-containing composition containing the crosslinkable compound and the inorganic particles.

The coating composition may be applied by any conventionally known technique. In particular, the technique is preferably spin coating, bar coating, squeegee coating, inkjet coating, or the like.

The thickness of the applied composition is not limited and may be appropriately selected according to the applications and the like of the film to be obtained. For example, when the composition is used as an optical material, the thickness of the composition applied is preferably adjusted so that the thickness of the film to be obtained falls within the range of 0.1 to 1000 um. The thickness of the composition applied is more preferably 0.5 to 100 μm, still more preferably 1 to 10 μm.

The film (coating) obtained by applying the composition of the present invention is preferably heated and/or exposed to active energy ray. The solvent in the coating can be evaporated and removed by heating. When the coating composition contains the crosslinkable compound, heating the coating or exposing the coating to active energy ray is performed to promote the crosslinking reaction between the crosslinkable compound and the sulfur-containing polymer in the coating. Thereby, a film made of a cured product can be obtained.

When the film (coating) obtained by applying the composition of the present invention is heated, the heating temperature is not limited and is preferably 50°C to 400°C, more preferably 100°C to 300°C. The heating duration is not limited and is preferably 0.01 to 10 hours, more preferably 0.1 to 2 hours.

The active energy ray is preferably UV light or an electron beam, with UV light being more preferred. When UV irradiation is performed, the UV dose (cumulative exposure) is not limited and is preferably within the range of 0.001 to 100 J/$cm^2$, more preferably 0.01 to 50 J/$cm^2$, still more preferably 0.05 to 10 J/$cm^2$.

Examples of a light source include various types of mercury lamps. Ultra-high pressure mercury lamps and metal halide lamps are preferred.

Non-limiting preferred examples of a base material to which the composition of the present invention is applied include light-transmissive substrates such as a glass plate, a quartz plate, an organic resin film, an organic resin molded article, and a film, sheet, or plate having a transparent inorganic oxide layer on the surface thereof; light-receiving substrates such as a Si semiconductor substrate and a compound semiconductor substrate (e.g., InGaAs); and light-emitting substrates such as LED, organic EL, and laser diode (semiconductor laser) substrates.

When being used as a molding composition, the composition of the present invention may be any of the various compositions of the preferred embodiments described above. In particular, the curable composition or the inorganic particle-containing composition is preferably used, and the curable composition containing inorganic particles is more preferably used.

Examples of a molding technique include conventionally known techniques using a metal or resin mold, such as injection molding, T-die, inflation, imprint molding, and nanoimprint molding methods; and a casting method.

When the molding composition is the curable composition, also in these molding techniques, heating and/or active energy ray irradiation is preferably performed to promote the crosslinking reaction, for example after molding. When heating is performed, the heating temperature and heating duration may be appropriately selected according to the molding technique used. The same applies to preferred embodiments and conditions for active energy ray irradiation. These techniques can provide materials molded into desired shapes such as lens, sheet, and film shapes.

The composition of the present invention can also be used as a thermoplastic material. In this case, the composition may be molded by any technique. Examples thereof include typically-known techniques for processing thermoplastic resins, such as injection molding, extrusion molding, T-die, and inflation methods. The molding may be a casting or applying method for molding into a desired shape. Non-limiting examples of the shape include various known shapes including lens, sheet, and film shapes.

The composition of the present invention may contain an optional component, in addition to the sulfur-containing polymer (the sulfur-containing polymers 1 and 2 and a different sulfur-containing polymer), the inorganic particles, the solvent, the crosslinkable compound, and the like. Examples of the optional component include pigments, dyes, antioxidants, ultraviolet absorbers, resins, reactive diluents, light stabilizers, plasticizers, non-reactive compounds, chain transfer agents, thermal polymerization initiators, anaerobic polymerization initiators, polymerization inhibitors, inorganic fillers, organic fillers, adhesion improvers such as coupling agents, heat stabilizers, antibacterial/antifungal agents, flame retardants, matting agents, defoamers, leveling agents, wetting/dispersing agents, precipitation inhibitors, thickeners/anti-sagging agents, color separation inhibitors, emulsifiers, anti-slip/anti-scratch agents, anti-skinning agents, desiccants, antifouling agents, antistatic agents, and conductive agents (electrostatic additives). These components may be used alone or in combination of two or more.

These components may be appropriately selected from known ones. The amounts of these to be added can be appropriately selected.

When being used for optical materials, the composition of the present invention may contain a different component as appropriate according to the applications of the optical materials. Specific examples of the different component include UV absorbers, IR blocking agents, reactive diluents, pigments, detergents, antioxidants, light stabilizers, plasticizers, non-reactive compounds, and defoamers.

4. Applications

The sulfur-containing polymer 1 of the present invention, the sulfur-containing polymer composition 1 containing the polymer 1, the sulfur-containing polymer 2 of the present invention, and the sulfur-containing polymer composition 2 containing the polymer 2 are suitably used for optical materials, optical device members, display device members, and the like. Specific examples of these applications include optical applications including lenses such as spectacle lenses, imaging lenses for cameras (e.g., (digital) cameras, mobile phone cameras, and vehicle-mounted cameras), light beam condensing lenses, and light diffusing lenses, LED encapsulants, optical adhesives, optical pressure-sensitive adhesives, bonding materials for optical transmission, filters, diffraction gratings, diffractive optical elements, prisms, and optical guides, and transparent glass and cover glass such as watch glasses and cover glasses for display devices; optical-device applications including photosensors such as optical sensors (e.g., CMOS sensors, TOF sensors), photoswitches, LEDs, micro-LEDs, light-emitting elements, optical waveguides, multiplexers, demultiplexers, disconnectors, optical splitters, and optical fiber adhesives; and display device applications including substrates for display elements such as LCDs, organic ELs, and PDPs, color filter substrates, touch panel substrates, index matching materials used for touch panels, display protective films, display backlights, light guide plates, antireflection films, antifogging films, and light extraction improvers for LEDs, organic ELs, and the like.

More preferred among these are imaging lenses, filters, diffraction gratings, diffractive optical elements, prisms, optical guides, LEDs, micro-LEDs, light-emitting elements, color filters, and touch panels. The sulfur-containing polymers 1 and 2 of the present invention typically tend to have no absorption in a wide range of the visible and infrared regions. Such polymers can also be preferably used as optical materials usable in the visible and infrared regions.

The sulfur-containing polymers 1 and 2 of the present invention and the sulfur-containing polymer compositions 1 and 2 containing the polymers 1 and 2 can be used in different applications other than optical applications. Examples of the different applications include various applications such as materials of machine parts, materials of electric and electronic parts, materials of automobile parts, materials for civil engineering and construction, molding materials, and materials of paints and adhesives. The sulfur-containing polymers 1 and 2 of the present invention typically tend to have excellent heat resistance. Thus, such highly heat-resistant polymers can also be used for heat-resistant materials, ferroelectric materials, heat-dissipating materials, separators for battery materials, filters such as gas separation membranes and liquid separation membranes, electrode materials in batteries such as fuel cells and Li batteries, and battery members such as electrolyte materials. The sulfur-containing polymers 1 and 2 of the present invention can also be suitably used as materials utilizing low dielectric properties, such as an insulating material and an antenna material.

The sulfur-containing polymers 1 and 2 of the present invention and the sulfur-containing polymer compositions

1 and 2 containing the polymers 1 and 2 can be suitably used as molding materials. Examples of a molding technique include conventionally known molding techniques using a metal or resin mold, such as injection molding, T-die, inflation, imprint molding, and nanoimprint molding methods. The molding technique may also be a casting or applying method for molding into a desired shape. Non-limiting examples of the shape include various known shapes including lens, sheet, and film shapes.

The sulfur-containing polymers 1 and 2 of the present invention and the sulfur-containing polymer compositions 1 and 2 containing the polymers 1 and 2 can be suitably used for processing by a conventionally known etching process such as plasma etching or by a conventionally known resist process using difference in solubility. They can also be suitably used for coating such as spin coating, bar coating, squeegee coating, or inkjet coating. To achieve good processability, the compositions containing the sulfur-containing polymers 1 and 2 of the present invention are preferably thermoplastic resin compositions. To reduce the viscosity and achieve good followability to a fine mold and a resin mold during molding, the compositions containing the sulfur-containing polymers 1 and 2 are preferably curable resin compositions.

As described above, the sulfur-containing polymers 1 and 2 of the present invention and the sulfur-containing polymer compositions 1 and 2 containing the polymers 1 and 2 can be suitably used in a wide variety of applications including optical applications.

EXAMPLES

The present invention is described in more detail with reference to, but not limited to, examples. It should be noted that the terms "part(s)" and "%" refer to "part(s) by mass" and "% by mass", respectively, unless otherwise stated. The polymers obtained in the examples and comparative examples and the sulfide-containing polymers used in the examples were evaluated according to the following techniques.

<Measurement of heavy metal content>

Measurement was performed using an ICP emission spectrometer ICP-8100 (Shimadzu Corporation) under appropriate plasma conditions (high frequency output 1.4 kW, coolant gas 20.0 L/min, plasma gas 1.40 L/min, carrier gas 0.60 L/min, a plasma light source). The heavy metal content (amount of iron) of a polymer was evaluated based on the calibration curve to determine the heavy metal content (ppm) of the polymer. A sample for measurement was prepared by appropriately diluting the polymer with N-methylpyrrolidone as a solvent so that the concentration of the polymer fell within 0.1 to 10% by mass.

<Weight average molecular weight (Mw), number average molecular weight (Mn)>

The weight average molecular weight (Mw) and number average molecular weight (Mn) of a polymer were determined by gel permeation chromatography (GPC) under the following conditions.

Apparatus 1: CBM-20A available from Shimadzu Corporation
Apparatus 2: 1260 Infinity available from Agilent Technologies
Detector: Differential refractive index detector (RI) (Shimadzu Corporation, SPD-20MA) and UV-visible infrared spectrophotometer (Shimadzu Corporation, SPD-20MA)
Column: TSKgel SuperHM-N available from Tosoh Corporation Column temperature: 40°C
Flow rate: 0.3 ml/min
Calibration curve: Polystyrene Standards
Eluent: chloroform, tetrahydrofuran

<MALDI (Time-of-flight mass spectrometry)>

A produced polymer was subjected to MALDI analysis under the following conditions.

Apparatus: Time-of-flight mass spectrometer (Bruker, AutoflexIII)
Preparation of sample: In 1.0 g of tetrahydrofuran were dissolved about 2 mg of a sample for measurement, 20 mg of 2,5-dihydroxybenzoic acid as a matrix agent, and 2.0 mg of sodium iodide as an ionizing agent to prepare a solution, and the solution was applied to a target plate for measurement and dried at room temperature for about 100 minutes.

<$^1$H-NMR>

A produced polymer was subjected to $^1$H-NMR analysis under the following conditions.

Apparatus: Nuclear magnetic resonance spectrometer (400 MHz) available from JEOL Ltd.
Solvent for measurement: dichloromethane-d2, chloroform-d. Preparation of sample: Several to several tens of milligrams of a produced polymer were dissolved in a solvent for measurement.

<$^{13}$C-NMR>

If necessary, $^{13}$C-NMR analysis was performed under the following conditions.

Apparatus: Nuclear magnetic resonance spectrometer (400 MHz) available from JEOL Ltd.
Solvent for measurement : chloroform-d.
Preparation of sample: Several tens to several hundreds of milligrams of a produced polymer were dissolved in a solvent for measurement.

<FAB-MS>

A produced polymer was subjected to FAB-MS analysis under the following conditions.

Apparatus: High resolution double focusing mass spectrometer (JMS-700) available from JEOL Ltd.
Preparation of sample: In 1.0 g of chloroform were dissolved about 1 mg of a sample for measurement and 5 mg of 3-nitrobenzyl alcohol as a matrix agent.

<IR>

A produced polymer was subjected to IR analysis under the following conditions.

Apparatus: Fourier transform infrared spectrophotometer (FT/IR-6100) available from JASCO Corporation
Preparation of sample: About 2 mg of a sample was diluted with about 300 mg of dry potassium bromide (KBr). The mixture was ground in a mortar with a pestle and molded.

<Element content ratio O/S ratio>

Using a film prepared as a sample by applying 0.25 mL of a polymer solution to a silicon wafer by spin coating and using a photoelectron spectrometer (JPS-9010TR, XPS, light source: Mg, X-ray output: 400 W) available from JEOL Ltd., the peak intensities derived from the 2p orbital of the sulfur atom and the 1s orbital of the oxygen atom were measured. The integration ratio of the peak intensities was calculated to determine the O/S ratio. If necessary, the peak intensity derived from the 1s orbital of the carbon atom was also measured. Taking the obtained result into account, the O/S ratio was calculated. For the sulfur atom peaks capable of being separated into sulfide and disulfide peaks, the sulfide/disulfide ratio was also calculated. For the measurement technique, the binding energy position, and the like, Handbook of X-ray Photoelectron Spectroscopy (published by JEOL Ltd. in March 1991) was used as a reference. For the peaks capable of being separated into sulfide and sulfoxide peaks by $^1$H-NMR analysis, the O/S ratio was determined by calculating the integral ratios of these.

<Binding energy>

Using a film prepared as a sample by applying 0.25 mL of a polymer solution to a silicon wafer by spin coating and using a photoelectron spectrometer (JPS-9010TR, XPS apparatus) available from JEOL Ltd., the binding energy was measured from the peak position of the 2p3/2 orbital of the sulfur atom.

<Organic elemental analysis>

A produced polymer was subjected to elemental analysis using the following apparatus.
Apparatus: JM10 available from J-Science Lab Co., Ltd.

<Visible light transmittance>

(Preparation of sample)

The polymers obtained in the examples and comparative examples (polymers after the oxidation reaction) were dissolved in chloroform to prepare solutions of the polymers each having a concentration of 10% by mass. The resulting solutions were applied to glass substrates (Matsunami Glass Ind., Ltd., S1111) having little absorption for visible light by spin coating at about 200 rpm for 60 seconds and dried at 100°C for 10 minutes. Thereby, 1-μm thin films were formed.

(Measurement 1: Transmittance of thin film)

The thin films formed were subjected to measurement of transmittance using a spectrophotometer (UV-visible-infrared spectrophotometer V-700 series available from JASCO Corporation). The visible light transmittances were evaluated by comparison at a transmittance of 400 nm. Air was used as a control sample. The transmittances are parallel transmittances.

(Measurement 2: Transmittance of thin film after heating)

The thin films used for the evaluation of transmittance were heated at 260°C for 10 minutes. The thin films after heating were subjected to measurement of transmittance as samples. The measurement technique and conditions are the same as those for the above-described transmittances of the thin films.

(Synthesis of monomer)

(Synthesis Example 1)

Synthesis of bis(2-methylphenyl)disulfide

A 500-mL three-necked flask was charged with water (98 mL), o-toluenethiol (2-methylbenzenethiol) (18.2 g, 0.147 mol), and tetrabutylammonium iodide (54.3 mg, 0.147 mol). A 30% hydrogen peroxide solution (15.2 mL, 0.147 mol) was added dropwise thereto at 1 mL/min, followed by stirring at 60°C for two hours. The contents were cooled to room temperature, a supernatant (aqueous layer) was removed, an aqueous sodium thiosulfate solution was added, the mixture was stirred at room temperature for two hours, and a supernatant (aqueous layer) was removed. The reaction solids were filtered, washed with pure water, followed by washing with methanol, and vacuum-dried, whereby bis(2-methylphenyl)disulfide was collected. The yield thereof was 98%.

For identification of the bis(2-methylphenyl)disulfide (2,2'-dimethyldiphenyldisulfide), $^{1}$H-NMR, $^{13}$C-NMR, and FAB-MS were performed.

(Synthesis Example 2)

Synthesis of dimethyl 2,2'-dithiodibenzoate

A 2.0-L three-necked flask was charged with methanol (1.1 L), and then 98% sulfuric acid (4.7 mL) was gradually added thereto, followed by stirring. After the stirring, 2,2'-dithiodibenzoic acid (101.10 g, 0.33 mol) was added thereto and the contents were heated under reflux for 48 hours. After the reaction was completed, the reaction solution was cooled to room temperature. The precipitated reaction solids were filtered, washed with methanol, followed by washing with pure water, and vacuum-dried at room temperature for four hours, whereby dimethyl 2,2'-dithiodibenzoate was collected. The yield thereof was 99%.

The structure of the product was identified by $^{1}$H-NMR, $^{13}$C-NMR, XPS, and FAB-MS analyses.

(Synthesis Example 3)

Synthesis of bis(4-methylphenyl)disulfide

Synthesis reaction was performed under the same conditions as in Synthesis Example 1, except that o-toluenethiol as the raw material was replaced by p-toluenethiol (4-methylbenzenethiol), whereby bis(4-methylphenyl) disulfide was obtained in a yield of 98%.

For identification of the bis(4-methylphenyl) disulfide (4,4'-dimethyldiphenyldisulfide), $^{1}$H-NMR, $^{13}$C-NMR, and

FAB-MS were performed.

(Production of sulfur-containing polymer)

(Example 1)

A 50-mL test tube was charged with diphenyl disulfide (10.92 g, 50.00 mmol), the bis(2-methylphenyl) disulfide (2.46 g, 10.00 mmol) obtained in Synthesis Example 1, iron (III) chloride (486.57 mg, 3.00 mmol), and trifluoromethanesulfonic acid (TfOH) (90.05 mg, 0.60 mmol). Next, while the test tube was heated to 160°C, nitrogen purge (20 mL/min) was performed for 10 minutes. Subsequently, the nitrogen purge was switched to air bubbling (20 mL/min) and oxidative polymerization was performed by stirring for 40 hours. After the stirring was completed, the resulting polymerization reaction solution was taken out of the tube at 160°C and cooled to room temperature. After the cooling, the solidified reaction product was pulverized, and the powder was dried, whereby a black polymer (Po1) powder was obtained. The yield thereof was 75% (calculated assuming that 100% of the additives remained).

The structure of the obtained polymer (Po1) was identified by various analyses such as $^1$H-NMR, XPS, GPC, MALDI, and an elemental analysis. As a result, in the $^1$H-NMR ($CD_2Cl_2$, 400 MHz, ppm), peaks appeared at $\delta$ = 7.18 (m, 29H) and 2.25 (s, 3H); and in the XPS, peaks appeared from 160.3 to 165.0 eV. By peak separation, the peaks were separated into the peaks from 160.3 to 165.0 eV (sulfide) and the peaks from 163.6 to 165.0 eV (disulfide). The ratio of the peak area of the sulfide to the peak area of the disulfide was 96:4. Moreover, the elemental analysis confirmed that the polymer had a composition of H = 4.3%, C = 66.9%, and S = 28.8% (polyarylene sulfide).

(Example 2)

A polymerization reaction was performed under the same conditions as in Example 1, except that $Na_2S_2O_8$ (sodium peroxodisulfate) (142.85 mg, 0.600 mmol) was added. A black polymer (Po2) powder was obtained by the polymerization reaction. The yield thereof was 80% (calculated assuming that 100% of the additives remained).

The structure of the obtained polymer (Po2) was identified by various analyses such as $^1$H-NMR, XPS, GPC, MALDI, and an elemental analysis. As a result, in the $^1$H-NMR ($CD_2Cl_2$, 400 MHz, ppm), peaks appeared at $\delta$ = 7.18 (m, 27H) and 2.25 (s, 3H), and the elemental analysis confirmed that the polymer had a composition of H = 4.2%, C = 68.3%, and S = 27.5% (polyarylene sulfide).

(Example 3)

A 50-mL test tube was charged with diphenyl disulfide (10.92 g, 50.00 mmol), the bis(2-methylphenyl) disulfide (2.46 g, 10.00 mmol) obtained in Synthesis Example 1, iron (III) chloride (486.57 mg, 3.00 mmol), (+)-CSA ((+)-10-camphorsulfonic acid) (139.38 mg, 0.600 mmol), and $Na_2S_2O_8$ (sodium peroxodisulfate) (142.85 mg, 0.600 mmol). Next, while the test tube was heated to 160°C, nitrogen purge (20 mL/min) was performed for 10 minutes. Subsequently, the nitrogen purge was switched to air bubbling (20 mL/min) and oxidative polymerization was performed by stirring for 40 hours. After the stirring was completed, the resulting polymerization reaction solution was taken out of the tube at 160°C and cooled to room temperature. After the cooling, the solidified reaction product was pulverized, and the powder was dried, whereby a black polymer (Po3) powder was obtained. The yield thereof was 92% (calculated assuming that 100% of the additives remained).

The structure of the obtained polymer (Po3) was identified by various analyses such as $^1$H-NMR, XPS, GPC, MALDI, and an elemental analysis. As a result, in the $^1$H-NMR ($CD_2Cl_2$, 400 MHz, ppm), peaks appeared at $\delta$ = 7.18 (m, 24H) and 2.25 (s, 3H), and the elemental analysis confirmed that the polymer had a composition of H = 4.2%, C = 68.3%, and S = 27.5%. In the MALDI, repeated peaks at m/z 107.99 and m/z 122.00 appeared, confirming that the polymer was a polymer containing $-C_6H_4S-$ and $-C_6H_3(CH_3)S-$ (polyarylene sulfide) as constituents.

(Example 4)

A polymerization reaction was performed under the same conditions as in Example 3, except that the reaction was performed without adding trifluoromethanesulfonic acid. A black polymer (Po4) powder was obtained by the polymerization reaction. The yield thereof was 90% (calculated assuming that 100% of the additives remained).

The structure of the obtained polymer (Po4) was identified by various analyses such as $^1$H-NMR, XPS, GPC, MALDI, and an elemental analysis. As a result, in the $^1$H-NMR ($CD_2Cl_2$, 400 MHz, ppm), peaks appeared at $\delta$ = 7.18 (m, 25H) and 2.25 (s, 3H), and the elemental analysis confirmed that the polymer had a composition of H = 4.3%, C = 67.9%, and S = 27.8% (polyarylene sulfide).

(Example 5)

A polymerization reaction was performed under the same conditions as in Example 3, except that iron (III) chloride was changed to iron (II) chloride (377.33 mg, 3.00 mmol). A black polymer (Po5) powder was obtained by the polymerization reaction. The yield thereof was 90% (calculated assuming that 100% of the additives remained).

The structure of the obtained polymer (Po5) was identified by various analyses such as $^1$H-NMR, XPS, GPC, and an elemental analysis. As a result, in the $^1$H-NMR ($CD_2Cl_2$, 400 MHz, ppm), peaks appeared at $\delta$ = 7.18 (m, 25H) and 2.25 (s, 3H), and the elemental analysis confirmed that the polymer had a composition of H = 4.3%, C = 68.8%, and S = 26.9% (polyarylene sulfide).

(Example 6)

A 1.0-L three-necked flask was charged with diphenyl disulfide (218.33 g, 1.00 mol), the bis(2-methylphenyl) disulfide (49.21 g, 0.20 mol) obtained in Synthesis Example 1, iron (III) chloride (9.73 g, 60.00 mmol), (+)-CSA ((+)-10-camphorsulfonic acid) (2.79 g, 12.00 mmol), and $Na_2S_2O_8$ (sodium peroxodisulfate) (2.86 g, 12.00 mmol). Next, while the three-necked flask was heated to 160°C, nitrogen purge (20 mL/min) was performed for 10 minutes. Subsequently, the nitrogen purge was switched to air bubbling (150 mL/min) and oxidative polymerization was performed by stirring for 40 hours. After the stirring was completed, the resulting polymerization reaction solution was taken out of the flask at 160°C and cooled to room temperature. After the cooling, the solidified reaction product was pulverized, and the powder was dried, whereby a black polymer (Po6) powder was obtained. The yield thereof was 93% (calculated assuming that 100% of the additives remained).

The structure of the obtained polymer (Po6) was identified by various analyses such as $^1$H-NMR, XPS, GPC, MALDI, and an elemental analysis. As a result, in the $^1$H-NMR ($CD_2Cl_2$, 400 MHz, ppm), peaks appeared at $\delta$ = 7.18 (m, 23H) and 2.25 (s, 3H), and the elemental analysis confirmed that the polymer had a composition of H = 4.3%, C = 68.1%, and S = 27.6% (polyarylene sulfide).

(Example 7)

A 1.0-L three-necked flask was charged with diphenyl disulfide (262.00 g, 1.20 mol), iron (III) chloride (9.73 g, 60.00 mmol), (+)-CSA ((+)-10-camphorsulfonic acid) (2.79 g, 12.00 mmol), and $Na_2S_2O_8$ (sodium peroxodisulfate) (2.86 g, 12.00 mmol). Next, while the three-necked flask was heated to 160°C, nitrogen purge (20 mL/min) was performed for 10 minutes. Subsequently, the nitrogen purge was switched to air bubbling (150 mL/min) and oxidative polymerization was performed by stirring for 20 hours. After the stirring was completed, the resulting polymerization reaction solution was taken out of the flask at 160°C and cooled to room temperature. After the cooling, the solidified reaction product was pulverized, and the powder was dried, whereby a black polymer (Po7) powder was obtained. The yield thereof was 87% (calculated assuming that 100% of the additives remained).

The structure of the obtained polymer (Po7) was identified by various analyses such as $^1$H-NMR, XPS, GPC, MALDI, and an elemental analysis. In the $^1$H-NMR ($CD_2Cl_2$, 400 MHz, ppm), a peak was observed at $\delta$ = 7.16 (m, 4H), and the elemental analysis confirmed that the polymer had a composition of H = 4.8%, C = 66.9%, and S = 28.3% (polyphenylene sulfide).

(Example 8)

A 1.0-L three-necked flask was charged with diphenyl disulfide (218.33 g, 1.00 mol), the dimethyl 2,2'-dithiodibenzoate (66.88 g, 0.20 mol) obtained in Synthesis Example 2, iron (III) chloride (9.73 g, 60.00 mmol), (+)-CSA ((+)-10-camphorsulfonic acid) (2.79 g, 12.00 mmol), and $Na_2S_2O_8$ (sodium peroxodisulfate) (2.86 g, 12.00 mmol).

Next, while the three-necked flask was heated to 160°C, nitrogen purge (20 mL/min) was performed for 10 minutes. Subsequently, the nitrogen purge was switched to air bubbling (150 mL/min) and oxidative polymerization was performed by stirring for 150 hours. After the stirring was completed, the resulting polymerization reaction solution was taken out of the flask at 160°C and cooled to room temperature. After the cooling, the solidified reaction product was pulverized, and the powder was dried, whereby a black polymer (Po8) powder was obtained. The yield thereof was 78% (calculated assuming that 100% of the additives remained).

The structure of the obtained polymer (Po8) was identified by various analyses such as $^1$H-NMR, XPS, GPC, MALDI, IR, and an elemental analysis. As a result, in the $^1$H-NMR ($CD_2Cl_2$, 400 MHz, ppm), peaks appeared at $\delta$ = 8.13 (m, 1H), $\delta$ = 7.23 (m, 23H), and $\delta$ = 3.95 (m, 3H); in the IR, a peak derived from an ester group appeared near 1730 $cm^{-1}$; and the elemental analysis confirmed that the polymer had a composition of H = 4.1%, C = 65.2%, S = 25.4%, and O = 5.3% (polyarylene sulfide).

(Example 9)

A 50-mL test tube was charged with diphenyl disulfide (10.92 g, 50.00 mmol), the bis(2-methylphenyl) disulfide (2.46 g, 10.00 mmol) obtained in Synthesis Example 1, iron (III) chloride (486.57 mg, 3.00 mmol), (+)-CSA ((+)-10-camphorsulfonic acid) (139.38 mg, 0.600 mmol), and $Na_2S_2O_8$ (sodium peroxodisulfate) (142.85 mg, 0.600 mmol). Next, while the test tube was heated to 160°C, nitrogen purge (20 mL/min) was performed for 10 minutes. Subsequently, the nitrogen purge was switched to air bubbling (20 mL/min) and oxidative polymerization was performed by stirring for 40 hours. After stopping the air bubbling, 10 mL of N-methylpyrrolidone was added thereto, the contents were stirred for 10 minutes and cool to room temperature, THF (90 mL) was added thereto as a solvent, the contents were stirred for 10 minutes, 1.0 mL of pure water was then added thereto (THF:water = 10:1), and the contents were stirred for 5 minutes. Then, while the round-bottom flask was cooled with an ice bath, trichloroisocyanuric acid (6.03 g) was added thereto, the contents were stirred for one hour. Zinc powder (2.15 g) was added thereto, and the contents were stirred at room temperature for 14 hours. After the reaction was completed, methanol (100 mL) was added to the reaction solution to precipitate a product. The precipitate in the reaction solution was filtered and washed with methanol and pure water. Then, the obtained powder was vacuum-dried at room temperature to obtain a white polymer (Po9) powder. The yield thereof was 91%.

The structure of the polymer (Po9) was identified by $^1$H-NMR, XPS, ICP, IR, an elemental analysis, and GPC. As a result, in the $^1$H-NMR ($CD_2Cl_2$, 400 MHz, ppm), peaks appeared at $\delta$ = 7.19 (m, 6H), $\delta$ = 7.56 (m, 17H), and 2.35 (m, 3H); the XPS confirmed that the ratio of sulfide group:sulfoxide group:sulfonate group was 45:55:0 (by mol%); and in the IR, a mercapto-derived peak appeared near 2570 $cm^{-1}$ and the terminal structure was identified to be -SH. The GPC (Mw = 3050, Mn = 1750) confirmed that the percentage of terminal aromatic rings (structural units) was 7.0 mol% based on 100 mol% of all aromatic rings (all structural units).

(Example 10)

A 50-mL test tube was charged with diphenyl disulfide (10.92 g, 50.00 mmol), the bis(2-methylphenyl) disulfide (2.46 g, 10.00 mmol) obtained in Synthesis Example 1, iron (III) chloride (486.57 mg, 3.00 mmol), (+)-CSA ((+)-10-camphorsulfonic acid) (139.38 mg, 0.600 mmol), and $Na_2S_2O_8$ (sodium peroxodisulfate) (142.85 mg, 0.600 mmol). Next, while the test tube was heated to 160°C, nitrogen purge (20 mL/min) was performed for 10 minutes. Subsequently, the nitrogen purge was switched to air bubbling (20 mL/min) and oxidative polymerization was performed by stirring for 40 hours. After the air bubbling was stopped, 10 mL of N-methylpyrrolidone was added thereto, the contents were stirred for 10 minutes and cooled to room temperature, THF (90 mL) was added thereto as a solvent, and the contents were stirred for 5 minutes. Then, the resulting reaction solution was added dropwise to 2.0 L of a solution of 3% hydrochloric acid in methanol for reprecipitation of the polymer (the polymer precipitated and settled). After the reprecipitation, the produced precipitate was filtered and washed with methanol and pure water. Then, the obtained powder was vacuum-dried at room temperature to obtain a white polymer (PolO) powder. The yield thereof was 93%.

The structure of the polymer (PolO) was identified by $^1$H-NMR, XPS, ICP, IR, and an elemental analysis. As a result, in the $^1$H-NMR ($CD_2Cl_2$, 400 MHz, ppm), peaks appeared at $\delta$ = 7.18 (m, 23H) and 2.35 (m, 3H), and in the XPS, peaks appeared from 160.1 to 164.8 eV. By peak separation, the peaks were separated into the peaks from 160.1 to 164.8 eV (sulfide) and the peaks from 163.5 to 164.8 eV (disulfide). The ratio of the peak area of the sulfide to the peak area of the disulfide was 96:4. In the MALDI, repeated peaks at m/z 107.95 and m/z 122.02 appeared, confirming that the polymer contained $-C_6H_4S-$ and - $C_6H_3(CH_3)S-$ as constituents.

(Example 11)

A 500-mL three-necked flask was charged with diphenyl disulfide (131.00 g, 0.6 mol), the bis(4-methylphenyl) disulfide (36.01 g, 0.15 mol) obtained in Synthesis Example 3, iron (III) chloride (6.05 g, 37.30 mmol), (+)-CSA (1.73 g, 7.46 mmol), and $Na_3S_2O_8$ (1.78 g, 7.46 mmol). While the test tube was heated to 160°C, nitrogen purge (20 mL/min) was performed for 10 minutes. Subsequently, the nitrogen purge was switched to air bubbling (20 mL/min) and oxidative polymerization was performed by stirring for 60 hours. After the air bubbling was stopped, 10 mL of N-methylpyrrolidone was added thereto, the contents were stirred for 10 minutes and cooled to room temperature, THF (90 mL) was added thereto as a solvent, and the contents were stirred for 5 minutes. Then, the resulting reaction solution was added dropwise to 2.0 L of a solution of 3% hydrochloric acid in methanol for reprecipitation of the polymer (the polymer precipitated and settled). After the reprecipitation, the produced precipitate was filtered and washed with methanol and pure water.

Then, the obtained powder was vacuum-dried at room temperature to obtain a white polymer (Po11) powder. The yield thereof was 92%.

The structure of the polymer (Po11) was identified by $^1$H-NMR, XPS, ICP, IR, and an elemental analysis. As a result, in the $^1$H-NMR ($CD_2Cl_2$, 400 MHz, ppm), peaks appeared at $\delta$ = 7.20 (m, 23H) and 2.25 (m, 3H), and in the

XPS, peaks appeared from 160.1 to 164.8 eV. By peak separation, the peaks were separated into the peaks from 160.1 to 164.8 eV (sulfide) and the peaks from 163.5 to 164.8 eV (disulfide). The ratio of the peak area of the sulfide to the peak area of the disulfide was 96:4. In the MALDI, repeated peaks at m/z 107.95 and m/z 122.02 appeared, confirming that the polymer contained $-C_6H_4S-$ and - $C_6H_3(CH_3)S-$ as constituents.

(Example 12)

A 200-mL three-necked flask was charged with 20.0 g of the polymer (Po9) obtained in Example 9 and 110 mL of sulfolane as a solvent. Next, while the three-necked flask was heated to 100°C, nitrogen purge (0.05 L/min) was performed for 10 minutes, and then the contents were naturally cooled to room temperature. After the natural cooling, the three-necked flask was immersed in a cooling water bath, and while nitrogen purge (0.03 L/min) was performed, 9.83 g of chlorosulfuric acid was gradually added dropwise thereto. After the dropwise addition was completed, the contents were stirred at room temperature for two hours. While the three-necked flask was cooled in a cooling water bath again, 1.66 g of zinc was added thereto, and the contents were stirred for 14 hours. After the reaction was completed, the obtained reaction solution was added dropwise to 550 mL of a methanol solution to precipitate a product, and the settled precipitate was filtered and washed with methanol and pure water. Then, the obtained powder was vacuum-dried at room temperature to obtain a polymer (Po12) powder. The yield thereof was 90%.

The structure of the polymer (Po12) was identified by $^1H$-NMR, ICP, GPC, IR, and an elemental analysis. The GPC confirmed that the polymer had a Mw of 3030 and a Mn of 1760. In the IR, a mercapto-derived peak appeared near 2570 $cm^{-1}$. The $^1H$-NMR ($CDCl_3$, 600 MHz, ppm) confirmed that the polymer (Po12) contained 24.5 mol% of thiol (-SH) groups in all aromatic rings. Since the amount of the thiol (-SH) groups in the polymer (Po9) is considered to be 7.0 mol% based on 100 mol% of all aromatic rings (all structural units), 17.5 mol% of thiol groups are presumably introduced by this reaction.

(Example 13)

A 100-ml round-bottom flask was charged with 4.0 g of the polymer (Po9) obtained in Example 9 and 12 g of THF and 8 g of N-methylpyrrolidone (NMP) as solvents. The contents were stirred for 10 minutes to prepare a solution in which the polymer was dissolved. To the solution was added 64 g of a dispersion of zirconium oxide in toluene (number average particle size: 15 nm, $ZrO_2$ content: 16% by mass), and the contents were stirred at 25°C for two hours. Then, 120 mL of hexane was added dropwise thereto, and the contents were stirred at 25°C for one hour and then allowed to stand for 0.5 hours. As a result, a precipitate was formed. Then, the precipitate was filtered and washed with a liquid mixture in which 50 wt% of hexane and 50 wt% of acetone were mixed. Then, the obtained powder was vacuum-dried at room temperature to obtain a complex (Po-Zr1) powder.

The structure of the complex (Po-Zr1) was identified by $^1H$-NMR, XPS, ICP, IR, an elemental analysis, and a SEM-EDS analysis. As a result, the $^1H$-NMR ($CD_2Cl_2$, 400 MHz) confirmed that almost no organic substances other than Po9 were observed. The amount of the organic substances was estimated to be 5 wt% or less. The SEM-EDS analysis confirmed that the composition ratio (mass ratio) of Po9:$ZrO_2$ was 30% by mass:70% by mass.

The number average particle size in the dispersion is a number-based average particle size measured by a dynamic light scattering method.

(Example 14)

First, 20 parts of the complex (Po-Zr1) powder obtained in Example 13 and 80 parts of N,N-dimethylformamide were mixed and stirred at 100°C for 10 minutes with a stirrer to obtain a composition. In the composition, the complex was dispersed, and part of the polymer (Po9) in the complex was dissolved in N,N-dimethylformamide.

The composition was spin-coated on one side of a glass substrate (Matsunami Glass Ind., Ltd., S1111) and dried at 150°C to obtain a 1-$\mu$m thin film.

The transmittance of the thin film was measured using a spectrophotometer (JASCO Corporation, UV-visible-infrared spectrophotometer V-700 series). As a result, the thin film was found to have a parallel transmittance of 80% at a wavelength of 400 nm.

(Comparative Example 1)

A polymerization reaction was performed under the same conditions as in Example 3, except that the iron (III) chloride was changed to aluminum chloride. The reaction yielded a brown liquid. The liquid had a molecular weight of less than 400, which indicated that no polymer was produced.

(Comparative Example 2)

A polymerization reaction was performed under the same conditions as in Example 3, except that iron (III) chloride was changed to vanadyl acetylacetonate ($VO(acac)_2$). The reaction yielded a brown liquid. The liquid had a molecular weight of less than 400, which indicated that no polymer was produced.

(Comparative Example 3)

A 50-mL test tube was charged with diphenyl disulfide (10.92 g, 50.00 mmol), the bis(2-methylphenyl) disulfide obtained in Synthesis Example 1 (2.46 g, 10.00 mmol), and iron (III) chloride (9.73 g, 60.00 mmol). Next, while the test tube was heated to 160°C, nitrogen purge (20 mL/min) was performed for 10 minutes. Subsequently, the nitrogen purge was switched to air bubbling (20 mL/min) and oxidative polymerization was performed by stirring for 40 hours. After the air bubbling was stopped, 20 mL of N-methylpyrrolidone was added thereto, the contents were stirred for 30 minutes and cooled to room temperature, THE (180 mL) was added thereto as a solvent, and the contents were stirred for 10 minutes. Then, the resulting reaction solution was added dropwise to 4.0 L of a solution of 3% hydrochloric acid in methanol for reprecipitation of the polymer (the polymer precipitated and settled).

The supernatant solvent was removed, and the precipitated polymer was dissolved in 100 mL of chloroform. The resulting solution was added dropwise to 2.0 L of a solution of 3% hydrochloric acid in methanol for reprecipitation of the polymer (the polymer precipitated and settled). After the reprecipitation, the produced precipitate was filtered and washed with methanol and pure water. Then, the obtained powder was vacuum-dried at room temperature to obtain a brown polymer powder.

The structure of the polymer was identified by $^1$H-NMR, XPS, ICP, IR, and an elemental analysis. As a result, in the $^1$H-NMR ($CD_2Cl_2$, 400 MHz, ppm), peaks appeared at $\delta$ = 7.18 (m, 31H) and 2.35 (m, 3H), and the elemental analysis confirmed that the polymer had a composition of H = 4.2%, C=69.5%, and S=26.3% (polyarylene sulfide).

(Comparative Example 4)

A 50-mL test tube was charged with diphenyl disulfide (10.92 g, 50.00 mmol), the bis(2-methylphenyl) disulfide obtained in Synthesis Example 1 (2.46 g, 10.00 mmol), vanadyl acetylacetonate ($VO(acac)_2$) (200.00 mg, 0.60 mmol), and trifluoromethanesulfonic acid (TfOH) (180.10 mg, 1.20 mmol). Next, while the test tube was heated to 160°C, nitrogen purge (20 mL/min) was performed for 10 minutes. Subsequently, the nitrogen purge was switched to air bubbling (20 mL/min) and oxidative polymerization was performed by stirring for 40 hours. After the air bubbling was stopped, 20 mL of N-methylpyrrolidone was added thereto, the contents were stirred for 10 minutes and cooled to room temperature, dichloromethane (100 mL) was added thereto as a solvent, and the contents were stirred for 10 minutes. Then, the resulting reaction solution was added dropwise to 3.0 L of a solution of 3% hydrochloric acid in methanol for reprecipitation of the polymer (the polymer precipitated and settled). After the reprecipitation, the produced precipitate was filtered and washed with methanol and pure water. Then, the obtained powder was vacuum-dried at room temperature to obtain a gray polymer powder.

The structure of the polymer was identified by $^1$H-NMR, ICP, and an elemental analysis. As a result, in the $^1$H-NMR ($CD_2Cl_2$, 400 MHz, ppm), peaks appeared at $\delta$ = 7.18 (m, 28H) and 2.35 (m, 3H), confirming that the polymer was polyarylene sulfide.

The polymers obtained in Examples 1 to 12 and Comparative Examples 1 to 4 were subjected to evaluations of average molecular weight, heavy metal content (amount of iron), and the like. The results are shown in Table 1.

In Examples 1 to 12, the polymers were obtained in high yields. In these examples, only a small amount of water was produced as a by-product of the polymerization reaction, and moreover, almost the entire produced water was removed by evaporation during the polymerization reaction. In particular, as shown in Table 1, in the polymers obtained in Examples 9 and 10, the catalyst residue was reduced by simple purification after the polymerization reaction. Even when a given amount of iron was left in the polymers as a catalyst residue, excellent visible light transmittance and excellent transmittance after heating can be achieved. On the other hand, although the polymer of Comparative Example 3 was obtained through repeated purification, it was inferior to the polymer obtained in Example 9 in visible light transmittance. In Comparative Examples 1 and 2 in which iron-containing substances were not used, no polymer was produced. In Comparative Example 4, the polymer was obtained using a vanadium compound as a catalyst and the amount of vanadium was reduced by purification. However, the polymer obtained did not have sufficient visible light transmittance.

[Table 1]

| | Yield (%) | Mn | Mw | Amount of iron in polymer (ppm) | Transmittance (%) | Transmittance after heating (%) |
|---|---|---|---|---|---|---|
| Example 1 | 75 | 540 | 1180 | 15,600 | - | - |
| Example 2 | 80 | 1250 | 2690 | - | - | - |
| Example 3 | 92 | 1580 | 3250 | 15,200 | - | - |
| Example 4 | 90 | 920 | 1990 | - | - | - |
| Example 5 | 90 | 1450 | 2930 | - | - | - |
| Example 6 | 93 | 1090 | 2350 | 21,500 | - | - |
| Example 7 | 87 | 820 | 1740 | - | - | - |
| Example 8 | 78 | 590 | 1180 | - | - | - |
| Example 9 | 91 | 1750 | 3050 | 42 | 87 | 86 |
| Example 10 | 93 | 1620 | 3200 | 1,960 | 78 | 81 |
| Example 11 | 92 | 1520 | 3040 | - | - | - |
| Example 12 | 90 | 1760 | 3030 | - | - | - |
| Comparative Example 1 | - | 220 | 300 | - | - | - |
| Comparative Example 2 | - | 200 | 320 | - | - | - |
| Comparative Example 3 | - | 680 | 1420 | 33,000 | Less than 70 | Less than 70 |
| Comparative Example 4 | - | 950 | 2440 | 1010 (vanadium) | Less than 70 | Less than 70 |

**Claims**

**1.** A method for producing a sulfur-containing polymer, the method comprising

polymerizing a monomer component containing at least one of a disulfide compound or a thiol compound using a catalyst,
the catalyst containing an iron-containing substance,
an amount of iron in the iron-containing substance being 50 mol% or less relative to 100 mol% of the monomer component.

**2.** The method for producing a sulfur-containing polymer according to claim 1,
wherein the polymerizing is performed in the presence of oxygen.

**3.** The method for producing a sulfur-containing polymer according to claim 1 or 2,
wherein the polymerizing is performed using at least one of an acid or a salt thereof.

**4.** The method for producing a sulfur-containing polymer according to any one of claims 1 to 3,
wherein the iron-containing substance contains iron having an oxidation number of 3 or higher.

**5.** A sulfur-containing polymer comprising:

at least one structural unit selected from the group consisting of a structural unit (A) represented by the following formula (3), a structural unit (B) represented by the following formula (4), and a structural unit (C) represented by the following formula (5),
the sulfur-containing polymer containing iron in an amount of 0.001 to 100000 ppm in 100% by mass of the

sulfur-containing polymer,
the formulas being as follows:

[Chem. 1]

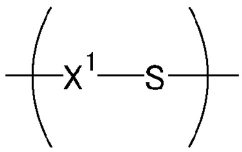

(3)

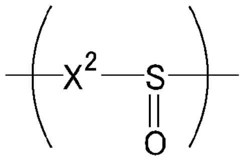

(4)

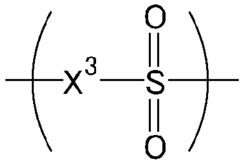

(5)

wherein $X^1$, $X^2$, and $X^3$ are the same as or different from each other and each represent a divalent aromatic hydrocarbon group optionally having a substituent.

**6.** A sulfur-containing polymer-containing composition comprising:

a sulfur-containing polymer produced by the method according to any one of claims 1 to 4; and
a component different from the sulfur-containing polymer.

**7.** A sulfur-containing polymer-containing composition comprising:

the sulfur-containing polymer according to claim 5; and
a component different from the sulfur-containing polymer.

## INTERNATIONAL SEARCH REPORT

International application No.
**PCT/JP2022/024850**

**A. CLASSIFICATION OF SUBJECT MATTER**

***C08G 75/0268***(2016.01)i; ***C07B 61/00***(2006.01)i; ***C07C 319/14***(2006.01)i; ***C07C 321/28***(2006.01)i; ***C08G 75/0204***(2016.01)i
FI: C08G75/0268; C08G75/0204; C07C321/28; C07C319/14; C07B61/00 300

According to International Patent Classification (IPC) or to both national classification and IPC

**B. FIELDS SEARCHED**

Minimum documentation searched (classification system followed by classification symbols)

C08G75/0268; C07B61/00; C07C319/14; C07C321/28; C08G75/0204

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 62-156139 A (TORAY IND., INC.) 11 July 1987 (1987-07-11)<br>claims, page 2, upper right column, line 20 to page 2, lower left column, line 4, examples | 5, 7<br>1-4, 6 |
| X<br>A | JP 9-278888 A (IDEMITSU PETROCHEM. CO., LTD.) 28 October 1997 (1997-10-28)<br>examples | 5, 7<br>1-4, 6 |
| A | JP 2012-92315 A (TORAY IND., INC.) 17 May 2012 (2012-05-17) | 1-7 |
| A | JP 2012-167198 A (MITSUBISHI GAS CHEMICAL CO., INC.) 06 September 2012 (2012-09-06) | 1-7 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/024850**

| Patent document cited in search report | Publication date (day/month/year) | Patent family member(s) | Publication date (day/month/year) |
|---|---|---|---|
| JP 62-156139 A | 11 July 1987 | (Family: none) | |
| JP 9-278888 A | 28 October 1997 | US 5856433 A<br>examples | |
| JP 2012-92315 A | 17 May 2012 | (Family: none) | |
| JP 2012-167198 A | 06 September 2012 | CN 102633980 A<br>CN 104725593 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017052834 A
- JP 453368 B


### Non-patent literature cited in the description


- *J. Polym. Sci.,* 1974, vol. 12, 2881-2889
- *Bull. Chem. Soc. Jpn.,* 1989, vol. 62, 3655-3660